# EUROPÄISCHE PATENTSCHRIFT

(11) **EP 3 083 079 B1**
(45) Veröffentlichungstag und Bekanntmachung des Hinweises auf die Patenterteilung: **08.01.2020**
(21) Anmeldenummer: 14800047.4
(22) Anmeldetag: 19.11.2014
(51) Int. Cl.: B05D 7/00

(54) **VERFAHREN ZUR HERSTELLUNG EINER MEHRSCHICHTLACKIERUNG**
METHOD FOR PRODUCING A MULTILAYER COATING
PROCÉDÉ DE FABRICATION D'UNE PEINTURE MULTICOUCHES

(30) Priorität: 18.12.2013 EP 13197973
(43) Veröffentlichungstag der Anmeldung: 26.10.2016
(73) Patentinhaber: BASF Coatings GmbH, 48165 Münster (DE)
(72) Erfinder: REUTER, Hardy, 48167 Münster (DE); STEINMETZ, Bernhard, 97535 Rütschenhausen (DE); BLOHM, Matthias, 48165 Münster (DE); TEICHMANN, Carsten, 48249 Dülmen (DE); GÖB, Bianca, 97440 Werneck (DE)
(74) Vertreter: BASF IP Association
(86) Internationale Anmeldenummer: PCT/EP2014/074975
(87) Internationale Veröffentlichungsnummer: WO 2015/090814

(56) Entgegenhaltungen:
- EP-A1- 0 839 885
- WO-A1-91/15528
- DE-B4- 19 948 004

## Beschreibung

Die vorliegende Erfindung betrifft ein Verfahren zur Herstellung einer Mehrschichtlackierung bei dem eine Basislackschicht oder mehrere direkt aufeinander folgende Basislackschichten direkt auf einem mit einer gehärteten Elektrotauchlackierung beschichteten metallischen Substrat hergestellt werden, direkt auf der einen oder der obersten der mehreren Basislackschichten eine Klarlackschicht hergestellt wird und anschließend die eine oder die mehreren Basislackschichten und die Klarlackschicht gemeinsam gehärtet werden. Zudem betrifft die vorliegende Erfindung eine Mehrschichtlackierung, die nach dem erfindungsgemäßen Verfahren hergestellt wurde.

### Stand der Technik

Mehrschichtlackierungen auf metallischen Substraten, beispielsweise Mehrschichtlackierungen im Bereich der Automobilindustrie, sind bekannt. In der Regel umfassen solche Mehrschichtlackierungen, vom metallischen Substrat aus betrachtet, eine Elektrotauchlackschicht, eine direkt auf die Elektrotauchlackschicht aufgebrachte, meist als Füllerschicht bezeichnete Schicht, mindestens eine Farb- und/oder Effektpigmente enthaltende und in der Regel als Basislackschicht bezeichnete Schicht sowie eine Klarlackschicht.

Die grundsätzlichen Zusammensetzungen und Funktionen der genannten Schichten und der zum Aufbau diese Schichten notwendigen Beschichtungsmittel, das heißt Elektrotauchlacke, so genannte Füller, als Basislacke bekannte Farb- und/oder Effektpigmente enthaltende Beschichtungsmittel und Klarlacke, sind bekannt. So dient beispielsweise die elektrophoretisch aufgebrachte Elektrotauchlackschicht grundsätzlich dem Korrosionsschutz des Substrats. Die so genannte Füllerschicht dient hauptsächlich dem Schutz vor mechanischer Beanspruchung wie beispielsweise Steinschlag und zudem dem Ausfüllen von Unebenheiten des Substrats. Die nächste, als Basislackschicht bezeichnete Schicht ist hauptverantwortlich für die Erzeugung von ästhetischen Eigenschaften wie der Farbe und/oder Effekten wie dem Flop, während die dann folgende Klarlackschicht insbesondere der Kratzfestigkeit sowie dem Glanz der Mehrschichtlackierung dient.

Die Herstellung dieser Mehrschichtlackierungen erfolgt in der Regel so, dass zunächst ein Elektrotauchlack, insbesondere ein kathodischer Elektrotauchlack elektrophoretisch auf dem metallischen Substrat, beispielsweise einer Automobilkarosserie, aufgebracht beziehungsweise abgeschieden wird. Das metallische Substrat kann vor der Abscheidung des Elektrotauchlacks unterschiedlich vorbehandelt werden, beispielsweise können bekannte Konversionsbeschichtungen wie Phosphatschichten, insbesondere Zinkphosphatschichten, aufgebracht werden. Der Abscheideprozess des Elektrotauchlacks findet in der Regel in entsprechenden Elektrotauchlackbecken statt. Nach dem Auftrag wird das beschichtete Substrat aus dem Becken entfernt, gegebenenfalls gespült und abgelüftet und/oder zwischengetrocknet, und schließlich wird der aufgetragene Elektrotauchlack gehärtet. Dabei werden Schichtdicken von etwa 15 bis 25 Mikrometer angestrebt. Anschließend wird der so genannte Füller direkt auf die gehärtete Elektrotauchlackschicht aufgetragen, gegebenenfalls abgelüftet und/oder zwischengetrocknet und anschließend gehärtet. Damit die gehärtete Füllerschicht die oben genannten Aufgaben erfüllen kann, werden Schichtdicken von beispielsweise 25 bis 45 Mikrometern angestrebt. Direkt auf die gehärtete Füllerschicht wird anschließend ein so genannter Farb- und/oder Effektpigmente enthaltener Basislack aufgebracht, dieser gegebenenfalls abgelüftet und/oder zwischengetrocknet und auf die so hergestellte Basislackschicht ohne separate Härtung direkt ein Klarlack aufgebracht. Anschließend werden die Basislackschicht und die gegebenenfalls zuvor ebenfalls abgelüftete und/oder zwischengetrocknete Klarlackschicht gemeinsam gehärtet (nassin-nass-Verfahren). Während die gehärtete Basislackschicht grundsätzlich vergleichsweise geringe Schichtdicken von beispielsweise 10 bis 20 Mikrometer aufweist, werden für die gehärtete Klarlackschicht Schichtdicken von beispielsweise 30 bis 60 Mikrometer angestrebt, um die beschriebenen anwendungstechnologischen Eigenschaften zu erreichen. Das Aufbringen von Füller, Basislack und Klarlack kann beispielsweise über die dem Fachmann bekannten Applikationsmethoden der pneumatischen und/oder elektrostatischen Sprühapplikation erfolgen. Füller und Basislack werden heutzutage schon aus ökologischen Gründen vermehrt als wässrige Beschichtungsstoffe eingesetzt.

Solche Mehrschichtlackierungen sowie Verfahren zu deren Herstellung werden beispielsweise in DE 199 48 004 A1, Seite 17, Zeile 37, bis Seite 19, Zeile 22, oder auch in DE 100 43 405 C1, Spalte 3, Absatz [0018], und Spalte 8, Absatz [0052] bis Spalte 9, Absatz [0057], in Verbindung mit Spalte 6, Absatz [0039] bis Spalte 8, Absatz [0050] beschrieben.

Auch wenn die so hergestellten Mehrschichtlackierungen die von der Automobilindustrie gestellten Anforderungen an anwendungstechnologische Eigenschaften und ästhetisches Profil in der Regel erfüllen können, rückt aus ökologischen und ökonomischen Motiven heutzutage immer mehr die Vereinfachung des beschriebenen und vergleichsweise komplexen Herstellprozesses in den Fokus der Automobilhersteller.

So gibt es Ansätze, bei denen versucht wird, auf den separaten Härtungsschritt des direkt auf die gehärtete Elektrotauchlackschicht aufgebrachten Beschichtungsmittels (des im Rahmen des oben beschriebenen Standardverfahrens als Füller bezeichneten Beschichtungsmittels) zu verzichten, gegebenenfalls dabei auch die Schichtdicke der aus diesem Beschichtungsmittel hergestellten Beschichtungsschicht herabzusetzen. In der Fachwelt wird diese also nicht separat gehärtete Beschichtungsschicht dann häufig als Basislackschicht (und nicht mehr als Füllerschicht) bezeichnet beziehungsweise in Abgrenzung zu einer darauf aufgebrachten zweiten Basislackschicht als erste Basislackschicht bezeichnet. Teilweise wird sogar versucht, vollständig auf diese Beschichtungsschicht zu verzichten (wobei dann also lediglich eine so genannte Basislackschicht direkt auf der Elektrotauchlackschicht hergestellt wird, welche ohne separaten Härtungsschritt mit einem Klarlack überschichtet wird, letztlich also ebenfalls auf einen separaten Härtungsschritt verzichtet wird). Anstelle des separaten Härtungsschritts und eines zusätzlichen abschließenden Härtungsschritts soll also lediglich ein abschließender Härtungsschritt nach Applikation aller auf der Elektrotauchlackschicht aufgebrachten Beschichtungsschichten erfolgen.

Gerade das Verzichten eines separaten Härtungsschritts des direkt auf die Elektrotauchlackschicht aufgebrachten Beschichtungsmittels ist unter ökologischen und ökonomischen Gesichtspunkten sehr vorteilhaft. Denn dies führt zu Energieeinsparung und der gesamte Herstellungsprozess kann selbstverständlich wesentlich stringenter und zügiger ablaufen.

Statt des separaten Härtungsschritts ist es also von Vorteil, dass die direkt auf der Elektrotauchlackschicht hergestellte Beschichtungsschicht lediglich bei Raumtemperatur abgelüftet und/oder bei erhöhten Temperaturen zwischengetrocknet wird, ohne dabei eine Härtung, die bekanntermaßen regelmäßig erhöhte Härtungstemperaturen und/oder lange Härtungszeiten benötigt, durchzuführen.

Problematisch ist jedoch, dass bei dieser Form der Herstellung heutzutage oft nicht die geforderten anwendungstechnologischen und ästhetischen Eigenschaften erlangt werden können.

So können durch den Verzicht auf die separate Härtung der direkt auf die Elektrotauchlackschicht aufgebrachten Beschichtungsschicht, beispielsweise der ersten Basislackschicht, vor der Applikation von weiteren Beschichtungsmitteln, beispielsweise einem zweiten Basislack und einem Klarlack, ungewünschte Luft-, Lösemittel- und/oder Feuchtigkeitseinschlüsse entstehen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche genannt, führen zu einem nachteilhaften optischen Erscheinungsbild. Die durch den Gesamtaufbau von erster Basislackschicht, zweiter Basislackschicht und Klarlack anfallende organische Lösemittel- beziehungsweise Wassermenge sowie die durch die Applikation eingetragene Luftmenge ist zu groß, als dass die gesamte Menge innerhalb eines abschließenden Härtungsschritts ohne die Erzeugung von Fehlstellen aus der Mehrschichtlackierung entweichen kann. Im Falle eines wie oben beschriebenen konventionellen Herstellprozesses, bei dem die so genannte Füllerschicht vor der Herstellung einer meist vergleichsweise dünnen (und damit nur vergleichsweise wenig Luft, organische Lösemittel und/oder Wasser enthaltende) Basislackschicht separat eingebrannt wird, ist die Lösung dieses Problems selbstverständlich deutlich weniger anspruchsvoll.

Aber auch bei der Herstellung von Mehrschichtlackierungen, bei denen auf den Einsatz des im Standardprozess als Füller bezeichneten Beschichtungsmittels vollständig verzichtet wird, das heißt also Systemen, in denen also nur ein so genannter Basislack direkt auf die gehärtete Elektrotauchlackschicht aufgebracht wird, stößt man häufig auf die beschriebenen Probleme mit Nadelstichen. Denn je nach Anwendung und Gebrauch der herzustellenden Mehrschichtlackierung wird bei vollständigem Verzicht auf die im Standardprozess als Füllerschicht bezeichnete Beschichtung in der Regel eine im Vergleich zu den Standardsystemen dickere Basislackschicht benötigt, um die gewünschten Eigenschaften zu erhalten. Damit ist auch in diesem Fall die Gesamtschichtdicke von Beschichtungsschichten, die im abschließenden Härtungsschritt gehärtet werden müssen, wesentlich höher als im Standardprozess, sodass die entsprechenden Probleme mit Nadelstichen auftreten können.

Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen.

Von Vorteil wäre demnach ein Verfahren zur Herstellung von Mehrschichtlackierungen, bei dem auf einen wie oben beschriebenen separaten Härtungsschritt des direkt auf die Elektrotauchlackschicht aufgebrachten Beschichtungsmittels verzichtet werden kann und die hergestellte Mehrschichtlackierung trotzdem eine ausgezeichnete Stabilität gegen Nadelstiche aufweist.

### Aufgabe

Aufgabe der vorliegenden Erfindung war es demzufolge, ein Verfahren zur Herstellung einer Mehrschichtlackierung auf metallischen Substraten zu finden, bei dem das direkt auf die Elektrotauchlackierung aufgebrachte Beschichtungsmittel nicht separat gehärtet wird, sondern bei dem dieses Beschichtungsmittel stattdessen in einem gemeinsamen Härtungsschritt mit weiteren danach aufgebrachten Beschichtungsschichten gehärtet wird. Trotz dieser Verfahrensvereinfachung sollten die resultierenden Mehrschichtlackierungen eine hervorragende Stabilität gegen Nadelstiche aufweisen, sodass die Mehrschichtlackierungen insbesondere die ästhetischen Anforderungen der Automobilhersteller und deren Kunden erfüllen. Zudem sollte es auf diese Weise möglich sein, je nach Anforderungen und individuellem Einsatzgebiet, Mehrschichtlackierungen bereitzustellen, in denen die eine oder die mehreren zwischen Elektrotauchlackschicht und Klarlackschicht angeordnete(n) Beschichtungsschicht(en) variable Schichtdicken haben können und in denen insbesondere auch bei höheren Schichtdicken keine Probleme mit Nadelstichen auftreten. Gleichzeitig sollten die auf die gehärtete Elektrotauchlackierung, aber vor einem Klarlack aufgebrachten Beschichtungsmittel wässrig sein, um den wachsenden Anforderungen an das ökologische Profil von Lackierungen zu erfüllen.

### Technische Lösung

Es wurde gefunden, dass die genannten Aufgaben gelöst werden konnten durch ein neues Verfahren zur Herstellung einer Mehrschichtlackierung (M) auf einem metallischen Substrat (S) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung (2.1) einer Basislackschicht (B.2.1) oder (2.2) mehrerer direkt aufeinander folgender Basislackschichten (B.2.2.x) direkt auf der gehärteten Elektrotauchlackschicht (E.1) durch (2.1) Aufbringen eines wässrigen Basislacks (b.2.1) direkt auf die Elektrotauchlackschicht (E.1) oder (2.2) direkt aufeinanderfolgendes Aufbringen von mehreren Basislacken (b.2.2.x) auf die Elektrotauchlackschicht (E.1),
(3) Herstellung einer Klarlackschicht (K) direkt auf (3.1) der Basislackschicht (B.2.1) oder (3.2) der obersten Basislackschicht (B.2.2.x) durch Aufbringen eines Klarlacks (k) direkt auf (3.1) die Basislackschicht (B.2.1) oder (3.2) die oberste Basislackschicht (B.2.2.x),
(4) gemeinsame Härtung der (4.1) Basislackschicht (B.2.1) und der Klarlackschicht (K) oder (4.2) der Basislackschichten (B.2.2.x) und der Klarlackschicht (K),
dadurch gekennzeichnet, dass
der Basislack (b.2.1) oder mindestens einer der Basislacke (b.2.2.x) mindestens eine wässrige Dispersion enthaltend mindestens ein Mischpolymerisat (MP) umfasst, wobei das Mischpolymerisat (MP) herstellbar ist, durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
   wobei
   (a) ein wasserlöslicher Initiator verwendet wird,
   (b) die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
   (c) die Mischung der olefinisch ungesättigten Monomere mindestens ein mehrfach olefinisch ungesättigtes Monomer enthält.

Das oben genannte Verfahren wird in der Folge auch als erfindungsgemäßes Verfahren bezeichnet und ist dementsprechend Gegenstand der vorliegenden Erfindung. Bevorzugte Ausführungsformen des erfindungsgemäßen Verfahrens sind der weiter unten folgenden Beschreibung sowie den Unteransprüchen zu entnehmen.

Weiterhin Gegenstand der vorliegenden Erfindung ist eine Mehrschichtlackierung, die anhand des erfindungsgemäßen Verfahrens hergestellt wurde.

Das erfindungsgemäße Verfahren erlaubt die Herstellung von Mehrschichtlackierungen unter Verzicht auf einen separaten Härtungsschritt der direkt auf der Elektrotauchlackschicht hergestellten Beschichtungsschicht. Der besseren Übersichtlichkeit halber wird diese Beschichtungsschicht im Rahmen der vorliegenden Erfindung als Basislackschicht bezeichnet. Statt separater Härtung wird diese Basislackschicht zusammen mit gegebenenfalls weiteren Basislackschichten unterhalb der Klarlackschicht und der Klarlackschicht gemeinsam gehärtet. Trotzdem resultieren durch die Anwendung des erfindungsgemäßen Verfahrens Mehrschichtlackierungen, die eine ausgezeichnete Stabilität gegen Nadelstiche aufweisen, sodass auch höhere Schichtdicken der entsprechenden Basislackschichten ohne ästhetischen Qualitätsverlust aufgebaut werden können. Weiterhin ist es möglich, die entsprechenden Basislackschichten mit wässrigen Beschichtungsmitteln aufzubauen, um dadurch auch den ökologischen Anforderungen gerecht zu werden.

### Ausführliche Beschreibung

Zunächst seien einige im Rahmen der vorliegenden Erfindung verwendeten Begriffe erläutert.

Das Aufbringen eines Beschichtungsmittels auf ein Substrat beziehungsweise das Herstellen einer Beschichtungsschicht auf einem Substrat verstehen sich wie folgt. Das jeweilige Beschichtungsmittel wird so aufgebracht, dass die daraus hergestellte Beschichtungsschicht auf dem Substrat angeordnet ist, jedoch nicht zwangsläufig in direktem Kontakt mit dem Substrat stehen muss. Zwischen der Beschichtungsschicht und dem Substrat können beispielsweise noch andere Schichten angeordnet sein. Beispielsweise wird in Stufe (1) die gehärtete Elektrotauchlackschicht (E.1) auf dem metallischen Substrat (S) hergestellt, jedoch kann zwischen dem Substrat und der Elektrotauchlackschicht noch eine wie weiter unten beschriebene Konversionsbeschichtung wie eine Zinkphosphatierung angeordnet sein.
Dasselbe Prinzip gilt für das Aufbringen eines Beschichtungsmittels (b) auf eine mittels eines anderen Beschichtungsmittels (a) hergestellte Beschichtungsschicht (A) beziehungsweise die Herstellung einer Beschichtungsschicht (B) auf einer anderen Beschichtungsschicht (A), die beispielsweise auf dem metallischen Substrat (S) angeordnet ist. Die Beschichtungsschicht (B) muss nicht zwangsläufig mit der Beschichtungsschicht (A) in Kontakt stehen, sie muss lediglich darüber, das heißt auf der vom metallischen Substrat abgewandten Seite der Beschichtungsschicht (A) angeordnet sein.

Im Unterschied dazu versteht sich das Aufbringen eines Beschichtungsmittels direkt auf ein Substrat beziehungsweise das Herstellen einer Beschichtungsschicht direkt auf einem Substrat wie folgt. Das jeweilige Beschichtungsmittel wird so aufgebracht, dass die daraus hergestellte Beschichtungsschicht auf dem Substrat angeordnet ist und in direktem Kontakt mit dem Substrat steht. Zwischen Beschichtungsschicht und Substrat ist also insbesondere keine andere Schicht angeordnet. Selbiges gilt selbstverständlich für das Aufbringen eines Beschichtungsmittels (b) direkt auf eine mittels eines anderen Beschichtungsmittels (a) hergestellte Beschichtungsschicht (A) beziehungsweise die Herstellung einer Beschichtungsschicht (B) direkt auf einer anderen Beschichtungsschicht (A), die beispielsweise auf dem metallischen Substrat (S) angeordnet ist. In diesem Fall stehen die beiden Beschichtungsschichten in direktem Kontakt, sind also direkt aufeinander angeordnet. Insbesondere befindet sich keine weitere Schicht zwischen den Beschichtungsschichten (A) und (B).

Dasselbe Prinzip gilt selbstverständlich für ein direkt aufeinanderfolgendes Aufbringen von Beschichtungsmitteln beziehungsweise die Herstellung von direkt aufeinanderfolgenden Beschichtungsschichten.

Unter Ablüften, Zwischentrocknen und Härten werden im Rahmen der vorliegenden Erfindung die dem Fachmann im Zusammenhang mit Verfahren zur Herstellung von Mehrschichtlackierungen geläufigen Begriffsinhalte verstanden.

Somit versteht sich der Begriff Ablüften grundsätzlich als Bezeichnung für das Verdunsten beziehungsweise Verdunsten lassen von organischen Lösemitteln und/oder Wasser eines im Rahmen der Herstellung einer Lackierung aufgebrachten Beschichtungsmittels bei meist Umgebungstemperatur (das heißt Raumtemperatur), beispielsweise 15 bis 35°C für eine Dauer von beispielsweise 0,5 bis 30 min. Während des Ablüftens verdunsten also organische Lösemittel und/oder Wasser, die in dem aufgebrachten Beschichtungsmittel enthalten sind. Da das Beschichtungsmittel jedenfalls direkt nach dem Auftragen und zu Beginn des Ablüftens noch fließfähig ist, kann es während des Ablüftens verlaufen. Denn zumindest ein durch Spritzapplikation aufgetragenes Beschichtungsmittel wird in der Regel tröpfchenförmig und nicht in homogener Dicke aufgetragen. Es ist aber durch die enthaltenen organischen Lösemittel und/oder Wasser fließfähig und kann somit durch das Verlaufen einen homogenen, glatten Beschichtungsfilm bilden. Gleichzeitig verdunsten organische Lösemittel und/oder Wasser sukzessive, sodass nach der Ablüftphase eine vergleichsweise glatte Beschichtungsschicht entstanden ist, die im Vergleich zum aufgebrachten Beschichtungsmittel weniger Wasser und/oder Lösemittel enthält. Die Beschichtungsschicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist die Beschichtungsschicht noch nicht wie weiter unten beschrieben gehärtet.

Unter Zwischentrocknen versteht man somit ebenfalls das Verdunsten beziehungsweise Verdunsten lassen von organischen Lösemitteln und/oder Wasser eines im Rahmen der Herstellung einer Lackierung aufgebrachten Beschichtungsmittels, meist bei gegenüber der Umgebungstemperatur erhöhter Temperatur von beispielsweise 40 bis 90°C, für eine Dauer von beispielsweise 1 bis 60 min. Auch beim Zwischentrocknen wird damit das aufgetragene Beschichtungsmittel einen Anteil von organischen Lösemitteln und/oder Wasser verlieren. Bezogen auf ein bestimmtes Beschichtungsmittel gilt in der Regel, dass das Zwischentrocknen im Vergleich zum Ablüften bei beispielsweise höheren Temperaturen und/oder für einen längeren Zeitraum von statten geht, sodass im Vergleich zum Ablüften auch ein höherer Anteil von organischen Lösemitteln und/oder Wasser aus der aufgebrachten Beschichtungsschicht entweicht. Aber auch durch das Zwischentrocknen erhält man keine Beschichtungsschicht im gebrauchsfertigen Zustand, das heißt keine wie weiter unten beschrieben gehärtete Beschichtungsschicht. Eine typische Abfolge von Ablüften und Zwischentrocken wäre beispielsweise, eine aufgebrachte Beschichtungsschicht für 5 min bei Umgebungstemperatur abzulüften und dann bei 80°C für 10 min zwischenzutrocken. Eine abschließende Abgrenzung beider Begriffe voneinander ist jedoch weder notwendig noch gewollt. Der reinen Übersichtlichkeit halber werden diese Begriffe verwendet, um deutlich zu machen, dass eine der unten beschriebenen Härtung vorausgehende, variable und sequenzielle Konditionierung einer Beschichtungsschicht stattfinden kann, bei der - abhängig vom Beschichtungsmittel, der Abdunsttemperatur und Abdunstdauer - ein mehr oder weniger hoher Anteil der im Beschichtungsmittel enthaltenen organischen Lösemittel und/oder Wasser abdunsten kann. Gegebenenfalls kann dabei sogar bereits ein Anteil der in den Beschichtungsmittel enthaltenen Polymere als Bindemittel wie unten beschrieben miteinander vernetzen oder verschlaufen. Sowohl beim Ablüften als auch beim Zwischentrocknen wird aber keine gebrauchsfertige Beschichtungsschicht erhalten, wie dies bei der unten beschriebenen Härtung der Fall ist. Demzufolge ist die Härtung eindeutig vom Ablüften und Zwischentrocknen abgegrenzt.

Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommen die thermisch-chemische Härtung und die aktinisch-chemische Härtung in Betracht. Ein Beschichtungsmittel kann, beispielsweise sofern es thermisch-chemisch härtbar ist, selbst- und/oder fremdvernetzend sein. Unter der Angabe, dass ein Beschichtungsmittel selbst- und/oder fremdvernetzend ist, ist im Rahmen der vorliegenden Erfindung zu verstehen, dass dieses Beschichtungsmittel Polymere als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel werden weiter unten beschrieben.

Im Rahmen der vorliegenden Erfindung bedeutet "physikalisch härtbar" beziehungsweise der Begriff "physikalische Härtung" die Bildung einer gehärteten Beschichtungsschicht durch Abgabe von Lösemittel aus Polymerlösungen oder Polymerdispersionen, wobei die Härtung durch eine Verschlaufung von Polymerketten erreicht wird.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung einer Lackschicht (Bildung einer gehärteten Beschichtungsschicht), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in einem als Bindemittel eingesetzten organischen Polymer, beispielsweise einem Polyester, einem Polyurethan oder einen Poly(meth)acrylat vorhanden, liegt eine Selbstvernetzung vor. Eine Fremdvernetzung liegt beispielsweise vor, wenn ein (erstes) organisches Polymer enthaltend bestimmte funktionelle Gruppen, beispielsweise Hydroxylgruppen, mit einem an sich bekannten Vernetzungsmittel, beispielsweise einem Polyisocyanat und/oder einem Melaminharz, reagiert. Das Vernetzungsmittel enthält also reaktive funktionelle Gruppen, die zu den in dem als Bindemittel eingesetzten (ersten) organischen Polymer vorhandenen reaktiven funktionellen Gruppen komplementär sind.

Insbesondere im Fall der Fremdvernetzung kommen die an sich bekannten Einkomponenten- und Mehrkomponentensysteme, insbesondere Zweikomponenten-systeme in Betracht.

In Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C miteinander reagieren, das heißt Härtungsreaktionen eingehen. Andernfalls müssten die zu vernetzenden Komponenten getrennt voneinander gelagert werden und erst kurz vor dem Aufbringen auf ein Substrat miteinander vermischt werden, um eine vorzeitige zumindest anteilige thermisch-chemische Härtung zu vermeiden (vergleiche Zweikomponenten-Systeme). Als beispielhafte Kombination seien hydroxyfunktionelle Polyester und/oder Polyurethane mit Melaminharzen und/oder blockierten Polyisocyanaten als Vernetzungsmittel genannt.

In Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung zur Härtung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff-Doppelbindungen, wobei hierbei in der Regel radikalische Photoinitiatoren zum Einsatz kommen. Der aktinischen Härtung liegt also ebenfalls eine chemische Vernetzung zugrunde.

Selbstverständlich wird bei der Härtung eines als chemisch härtbar gekennzeichnetes Beschichtungsmittel immer auch eine physikalische Härtung, das heißt eine Verschlaufung von Polymerketten, auftreten. Trotzdem wird ein solches Beschichtungsmittel dann als chemisch härtbar bezeichnet.

Aus Obigem folgt, dass je nach Art des Beschichtungsmittels und den darin enthaltenen Komponenten eine Härtung durch unterschiedliche Mechanismen bewirkt wird, die selbstverständlich auch unterschiedliche Bedingungen bei der Härtung notwendig machen, insbesondere unterschiedliche Härtungstemperaturen und Härtungsdauern.

Im Falle eines rein physikalisch härtenden Beschichtungsmittels erfolgt eine Härtung bevorzugt zwischen 15 und 90°C über einen Zeitraum von 2 bis 48 Stunden. In diesem Fall unterscheidet sich die Härtung vom Ablüften und/oder Zwischentrocken also gegebenenfalls lediglich durch die Dauer der Konditionierung der Beschichtungsschicht. Eine Differenzierung zwischen Ablüften und Zwischentrocknen ist zudem nicht sinnvoll. Möglich wäre beispielsweise, eine durch Aufbringen eines physikalisch härtbaren Beschichtungsmittels hergestellte Beschichtungsschicht zunächst bei 15 bis 35°C für eine Dauer von beispielsweise 0,5 bis 30 min abzulüften beziehungsweise zwischenzutrocknen und anschließend bei 50°C für eine Dauer von 5 Stunden zu härten.

Bevorzugt sind die im Rahmen des erfindungsgemäßen Verfahrens einzusetzenden Beschichtungsmittel, das heißt Elektrotauchlacke, wässrige Basislacke und Klarlacke aber jedenfalls thermisch-chemisch härtbar, insbesondere bevorzugt thermisch-chemisch härtbar und fremdvernetzend.

Grundsätzlich und im Rahmen der vorliegenden Erfindung gilt dabei, dass die Härtung von Einkomponenten-Systemen bevorzugt bei Temperaturen von 100 bis 250°C, bevorzugt 100 bis 180°C für eine Dauer von 5 bis 60 min, bevorzugt 10 bis 45 min durchgeführt wird, da diese Bedingungen in der Regel notwendig sind, um die Beschichtungsschicht durch chemische Vernetzungsreaktionen in eine gehärtete Beschichtungsschicht zu überführen. Dementsprechend gilt, dass eine vor der Härtung stattfindende Ablüft- und/oder Zwischentrockungsphase bei geringeren Temperaturen und/oder für kürzere Zeiten erfolgt. Beispielsweise kann in einem solchen Fall bei 15 bis 35°C für eine Dauer von beispielsweise 0,5 bis 30 min abgelüftet werden und/oder bei einer Temperatur von beispielsweise 40 bis 90°C für eine Dauer von beispielsweise 1 bis 60 min zwischengetrocknet werden.

Grundsätzlich und im Rahmen der vorliegenden Erfindung gilt, dass die Härtung von Zweikomponenten-Systemen bei Temperaturen von beispielsweise 15 bis 90°C, bevorzugt 40 bis 90°C für eine Dauer von 5 bis 80 min, bevorzugt 10 bis 50 min durchgeführt wird. Dementsprechend gilt, dass eine vor der Härtung stattfindende Ablüft- und/oder Zwischentrockungsphase bei geringeren Temperaturen und/oder für kürzere Zeiten erfolgt. Beispielsweise ist es in einem solchen Fall nicht mehr sinnvoll, zwischen den Begriffen Abdunsten und Zwischentrocken zu unterscheiden. Eine der Härtung vorausgehende Ablüft- beziehungsweise Zwischentrockungsphase kann beispielsweise bei 15 bis 35°C für eine Dauer von beispielsweise 0,5 bis 30 min ablaufen, jedoch jedenfalls bei geringeren Temperaturen und/oder für geringere Zeiten als die dann folgende Härtung.
Dies schließt natürlich nicht aus, dass ein Zweikomponenten-System bei höheren Temperaturen gehärtet wird. Beispielsweise werden im weiter unten genauer beschriebenen Schritt (4) des erfindungsgemäßen Verfahrens eine Basislackschicht oder mehrere Basislackschichten gemeinsam mit einer Klarlackschicht gehärtet. Sind innerhalb der Schichten sowohl Einkomponenten- als auch Zweikomponenten-Systeme vorhanden, beispielsweise ein Einkomponenten-Basislack und ein Zweikomponenten-Klarlack, so richtet sich die gemeinsame Härtung selbstverständlich nach den für das Einkomponenten-System notwendigen Härtungsbedingungen.

Alle im Rahmen der vorliegenden Erfindung erläuterten Temperaturen verstehen sich als Temperatur des Raumes, in dem sich das beschichtete Substrat befindet. Gemeint ist also nicht, dass das Substrat selbst die entsprechende Temperatur aufweisen muss.

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

### Das erfindungsgemäße Verfahren

Im Rahmen des erfindungsgemäßen Verfahrens wird eine Mehrschichtlackierung auf einem metallischen Substrat (S) aufgebaut.

Als metallische Substrate (S) kommen grundsätzlich Substrate enthaltend oder bestehend aus beispielsweise Eisen, Aluminium, Kupfer, Zink, Magnesium und deren Legierungen sowie Stahl in unterschiedlichsten Formen und Zusammensetzungen in Betracht. Bevorzugt sind Eisen- und Stahlsubstrate, beispielsweise typische Eisen- und Stahlsubstrate wie sie im Bereich der Automobilindustrie eingesetzt werden. Die Substrate können an sich beliebig geformt sein, das heißt es kann sich beispielsweise um einfache Bleche oder auch um komplexe Bauteile wie insbesondere Automobilkarosserien und Teile davon handeln.

Die metallischen Substrate (S) können vor der Stufe (1) des erfindungsgemäßen Verfahrens auf an sich bekannte Weise vorbehandelt werden, das heißt beispielsweise gereinigt und/oder mit bekannten Konversionsbeschichtungen versehen werden. Eine Reinigung kann mechanisch beispielsweise mittels Wischen, Schleifen und/oder Polieren und/oder chemisch mittels Beizverfahren durch Anätzen in Säure- oder Laugenbädern, beispielsweise mittels Salz- oder Schwefelsäure erfolgen. Auch die Reinigung mit organischen Lösemitteln oder wässrigen Reinigern ist natürlich möglich. Eine Vorbehandlung durch Aufbringen von Konversionsbeschichtungen, insbesondere mittels Phosphatierung und/oder Chromatierung, bevorzugt Phosphatierung kann ebenfalls stattfinden. Bevorzugt werden die metallischen Substrate jedenfalls konversionsbeschichtet, insbesondere phosphatiert, bevorzugt mit einer Zinkphosphatierung versehen.

In Stufe (1) des erfindungsgemäßen Verfahrens wird durch elektrophoretisches Aufbringen eines Elektrotauchlacks (e.1) auf das Substrat (S) und anschließende Härtung des Elektrotauchlacks (e.1) eine gehärtete Elektrotauchlackschicht (E.1) auf dem metallischen Substrat (S) hergestellt.

Der in Stufe (1) des erfindungsgemäßen Verfahrens eingesetzte Elektrotauchlack (e.1) kann ein kathodischer oder anodischer Elektrotauchlack sein. Bevorzugt handelt es sich um einen kathodischen Elektrotauchlack. Elektrotauchlacke sind dem Fachmann seit langem bekannt. Es handelt sich um wässrige Beschichtungsstoffe, die anionische oder kationische Polymere als Bindemittel enthalten. Diese Polymere enthalten funktionelle Gruppen, die potentiell anionisch sind, das heißt in anionische Gruppen überführt werden können, beispielsweise Carbonsäuregruppen, oder funktionelle Gruppen, die potentiell kationisch sind, das heißt in kationische Gruppen überführt werden können, beispielsweise Aminogruppen. Die Überführung in geladene Gruppen wird in der Regel durch den Einsatz entsprechender Neutralisationsmittel (organische Amine (anionisch), organische Carbonsäuren wie Ameisensäure (kationisch)) erreicht, wodurch dann die anionischen oder kationischen Polymere entstehen. Die Elektrotauchlacke enthalten in der Regel und damit bevorzugt zusätzlich typische Korrosionsschutzpigmente. Die im Rahmen der Erfindung bevorzugten kathodischen Elektrotauchlacke enthalten bevorzugt kationische Polymere als Bindemittel, insbesondere hydroxyfunktionelle Polyetheramine, welche bevorzugt aromatische Struktureinheiten aufweisen. Solche Polymere werden in der Regel durch Umsetzung entsprechender Bisphenol-basierter Epoxidharze mit Aminen wie beispielsweise Mono- und Dialkylaminen, Alkanolaminen und/oder Dialkylaminoalkylamine erhalten. Diese Polymere werden insbesondere in Kombination mit an sich bekannten blockierten Polyisocyanaten eingesetzt. Beispielhaft sei auf die in WO 9833835 A1, WO 9316139 A1, WO 0102498 A1 und WO 2004018580 A1 beschriebenen Elektrotauchlacke verwiesen.

Der Elektrotauchlack (e.1) ist also bevorzugt ein jedenfalls chemisch-thermisch härtbares Beschichtungsmittel, wobei er insbesondere fremdvernetzend ist. Bevorzugt ist der Elektrotauchlack (e.1) ein Einkomponenten-Beschichtungsmittel. Bevorzugt enthält der Elektrotauchlack (e.1) ein hydroxyfunktionelles Epoxidharz als Bindemittel und ein vollständig blockiertes Polyisocyanat als Vernetzungsmittel. Das Epoxidharz ist bevorzugt kathodisch, wobei es insbesondere Aminogruppen enthält.

Auch das im Rahmen der Stufe (1) des erfindungsgemäßen Verfahrens stattfindende elektrophoretische Aufbringen eines solchen Elektrotauchlacks (e.1) ist bekannt. Das Aufbringen verläuft elektrophoretisch. Das heißt, dass zu beschichtende metallische Werkstück wird zunächst in ein den Lack enthaltenes Tauchbad getaucht und ein elektrisches Gleichspannungsfeld wird zwischen dem metallischen Werkstück und einer Gegenelektrode angelegt. Das Werkstück fungiert also als Elektrode, die nichtflüchtigen Bestandteile des Elektrotauchlacks migrieren bedingt durch die beschriebene Ladung der als Bindemittel eingesetzten Polymere durch das elektrische Feld zum Substrat und scheiden sich auf dem Substrat ab, wodurch eine Elektrotauchlackschicht entsteht. Beispielsweise im Fall eines kathodischen Elektrotauchlacks wird das Substrat also als Kathode geschaltet, die dort durch die Wasserelektrolyse entstehenden Hydroxidionen neutralisieren das kationische Bindemittel, sodass es auf dem Substrat abgeschieden wird und sich eine Elektrotauchlackschicht bildet. Es handelt sich dann also um ein Aufbringen durch das elektrophoretische Tauchverfahren.

Nach dem elektrolytischen Aufbringen des Elektrotauchlacks (e.1) wird das beschichtete Substrat (S) aus dem Becken entfemt, gegebenenfalls mit beispielsweise wasserbasierten Spüllösungen abgespült, dann gegebenenfalls abgelüftet und/oder zwischengetrocknet, und schließlich wird der aufgetragene Elektrotauchlack gehärtet. Der aufgebrachte Elektrotauchlack (e.1) (beziehungsweise die aufgebrachte, noch nicht gehärtete Elektrotauchlackschicht) wird beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet.

Der auf das Substrat aufgebrachte Elektrotauchlack (e.1) (beziehungsweise die aufgebrachte, noch nicht gehärtete Elektrotauchlackschicht) wird bevorzugt bei Temperaturen von 100 bis 250°C, bevorzugt 140 bis 220°C für eine Dauer von 5 bis 60 min, bevorzugt 10 bis 45 min gehärtet, wodurch die gehärtete Elektrotauchlackschicht (E.1) hergestellt wird.

Die angegebenen Ablüft-, Zwischentrocknungs- und Härtungsbedingungen gelten insbesondere für den bevorzugten Fall, dass es sich bei dem Elektrotauchlack (e.1) um ein wie oben beschriebenes chemisch-thermisch härtbares Einkomponenten-Beschichtungsmittel handelt. Dies schließt aber nicht aus, dass der Elektrotauchlack ein auf andere Weise härtbares Beschichtungsmittel ist und/oder andere Ablüft-, Zwischentrocknungs- und Härtungsbedingungen eingesetzt werden.

Die Schichtdicke der gehärteten Elektrotauchlackschicht beträgt beispielsweise 10 bis 40 Mikrometer, bevorzugt 15 bis 25 Mikrometer. Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

In Stufe (2) des erfindungsgemäßen Verfahrens wird (2.1) eine Basislackschicht (B.2.1) hergestellt oder (2.2) es werden mehrere direkt aufeinander folgende Basislackschichten (B.2.2.x) hergestellt. Die Herstellung der Schichten erfolgt durch Aufbringen (2.1) eines wässrigen Basislacks (b.2.1) direkt auf die gehärtete Elektrotauchlackschicht (E.1) oder (2.2) direkt aufeinanderfolgendes Aufbringen von mehreren Basislacken (b.2.2.x) auf die gehärtete Elektrotauchlackschicht (E.1).

Das direkt aufeinanderfolgende Aufbringen von mehreren Basislacken (b.2.2.x) auf die gehärtete Elektrotauchlackschicht (E.1) versteht sich also so, dass zunächst ein erster Basislack direkt auf die Elektrotauchlackschicht aufgebracht wird und danach ein zweiter Basislack direkt auf die Schicht aus dem ersten Basislack aufgebracht wird. Ein gegebenenfalls dritter Basislack wird dann direkt auf die Schicht aus dem zweiten Basislack aufgebracht. Dieser Vorgang lässt sich dann analog für weitere Basislacke (das heißt einen vierten, fünften usw. Basislack) wiederholen.

Die Basislackschicht (B.2.1) oder die erste Basislackschicht (B.2.2.x) ist nach der Herstellung also direkt auf der gehärteten Elektrotauchlackschicht (E.1) angeordnet.

Die Begriffe Basislack und Basislackschicht in Bezug auf die in Stufe (2) des erfindungsgemäßen Verfahrens aufgebrachten Beschichtungsmittel und hergestellten Beschichtungsschichten werden der besseren Übersichtlichkeit halber verwendet. Die Basislackschichten (B.2.1) und (B.2.2.x) werden nicht separat gehärtet, sondern gemeinsam mit dem Klarlack gehärtet. Die Härtung erfolgt also analog der Härtung von in dem einleitend beschriebenen Standardverfahren eingesetzten so genannten Basislacken. Insbesondere werden die in Stufe (2) des erfindungsgemäßen Verfahrens eingesetzten Beschichtungsmittel nicht wie die im Rahmen des Standardverfahrens als Füller bezeichneten Beschichtungsmittel separat gehärtet.

Der in Stufe (2.1) eingesetzte wässrige Basislack (b.2.1) wird weiter unten im Detail beschrieben. Er ist jedoch bevorzugt jedenfalls chemisch-thermisch härtbar, wobei er dabei insbesondere fremdvernetzend ist. Bevorzugt ist der Basislack (b.2.1) ein Einkomponenten-Beschichtungsmittel. Bevorzugt enthält der Basislack (b.2.1) eine Kombination aus mindestens einem hydroxyfunktionellen Polymer als Bindemittel ausgewählt aus der Gruppe bestehend aus Polyurethanen, Polyestern, Polyacrylaten und Mischpolymerisaten der genannten Polymere, beispielsweise Polyurethan-Polyacrylaten, sowie mindestens einem Melaminharz als Vernetzungsmittel.

Der Basislack (b.2.1) kann durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt wird der Basislack (b.2.1) über die pneumatische Spritzapplikation oder die elektrostatische Spritzapplikation aufgetragen. Durch die Applikation des Basislacks (b.2.1) wird somit eine Basislackschicht (B.2.1), das heißt eine direkt auf der Elektrotauchlackschicht (E.1) aufgetragene Schicht des Basislacks (b.2.1) hergestellt.

Der aufgebrachte Basislack (b.2.1) beziehungsweise die entsprechende Basislackschicht (B.2.1) wird nach dem Auftrag beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet. Bevorzugt wird zunächst bei 15 bis 35°C für eine Dauer von 0,5 bis 30 min abgelüftet und anschließend bei 40 bis 90°C für eine Dauer von beispielsweise 1 bis 60 min zwischengetrocknet. Die beschriebenen Ablüft- und Zwischentrockungsbedingungen gelten insbesondere für den bevorzugten Fall, dass es sich bei dem Basislack (b.2.1) um ein chemisch-thermisch härtbares Einkomponenten-Beschichtungsmittel handelt. Dies schließt aber nicht aus, dass der Basislack (b.2.1) ein auf andere Weise härtbares Beschichtungsmittel ist und/oder andere Ablüft- und/oder Zwischentrocknungsbedingungen eingesetzt werden.

Die Basislackschicht (B.2.1) wird innerhalb der Stufe (2) des erfindungsgemäßen Verfahrens nicht gehärtet, das heißt bevorzugt nicht Temperaturen von über 100°C für eine Dauer von länger als 1 min ausgesetzt, insbesondere bevorzugt gar nicht Temperaturen von über 100°C ausgesetzt. Dies ergibt sich eindeutig und unmittelbar aus der weiter unten beschriebenen Stufe (4) des erfindungsgemäßen Verfahrens. Da die Basislackschicht erst in der Stufe (4) gehärtet wird, kann sie nicht bereits in der Stufe (2) gehärtet werden, denn dann wäre die Härtung in Stufe (4) nicht mehr möglich.

Auch die in Stufe (2.2) des erfindungsgemäßen Verfahrens eingesetzten wässrigen Basislacke (b.2.2.x) werden weiter unten im Detail beschrieben. Mindestens einer der in Stufe (2.2), bevorzugt alle der in Stufe (2.2) eingesetzten Basislacke (b.2.2.x) sind aber bevorzugt jedenfalls chemisch-thermisch härtbar, insbesondere bevorzugt fremdvernetzend. Bevorzugt ist mindestens ein Basislack (b.2.2.x) ein Einkomponenten-Beschichtungsmittel, bevorzugt gilt dies für alle Basislacke (b.2.2.x). Bevorzugt enthält mindestens einer der Basislacke (b.2.2.x) eine Kombination aus mindestens einem hydroxyfunktionellen Polymer als Bindemittel ausgewählt aus der Gruppe bestehend aus Polyurethanen, Polyestern, Polyacrylaten und Mischpolymerisaten der genannten Polymere, beispielsweise Polyurethan-Polyacrylaten, sowie mindestens einem Melaminharz als Vernetzungsmittel. Bevorzugt gilt dies für alle Basislacke (b.2.2.x).

Die Basislacke (b.2.2.x) können durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt werden die Basislacke (b.2.2.x) über die pneumatische Spritzapplikation und/oder die elektrostatische Spritzapplikation aufgetragen.

Im Rahmen der Stufe (2.2) des erfindungsgemäßen Verfahrens bietet sich die folgende Benennung an. Die Basislacke und Basislackschichten werden allgemein durch (b.2.2.x) und (B.2.2.x) gekennzeichnet, während bei der Benennung der konkreten einzelnen Basislacke und Basislackschichten das x durch entsprechend passende andere Buchstaben ersetzt werden kann.

Der erste Basislack und die erste Basislackschicht können mit a gekennzeichnet werden, der oberste Basislack und die oberste Basislackschicht können mit z gekennzeichnet werden. Diese beiden Basislacke beziehungsweise Basislackschichten sind in der Stufe (2.2) jedenfalls vorhanden. Gegebenenfalls dazwischen angeordnete Schichten können fortlaufend mit b, c, d und so weiter gekennzeichnet werden.

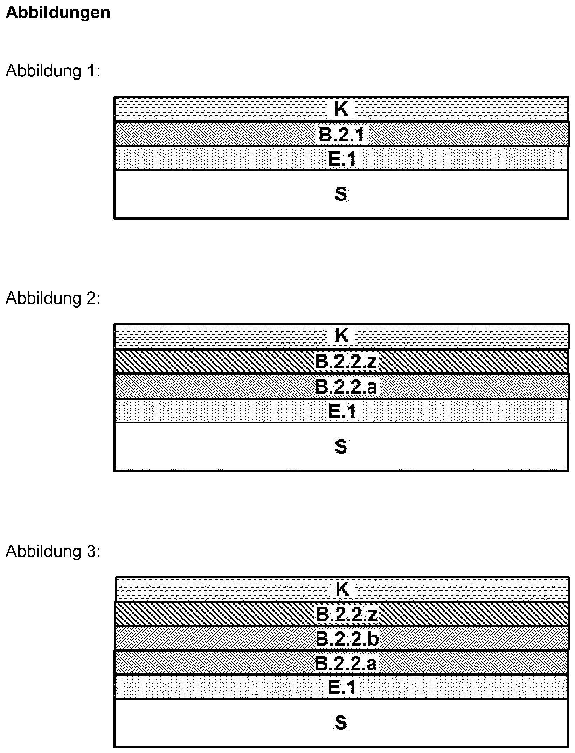

Durch die Applikation des ersten Basislacks (b.2.2.a) wird somit eine Basislackschicht (B.2.2.a) direkt auf der gehärteten Elektrotauchlackschicht (E.1) hergestellt. Die mindestens eine weitere Basislackschicht (B.2.2.x) wird dann direkt auf der Basislackschicht (B.2.2.a) hergestellt. Sofern mehrere weitere Basislackschichten (B.2.2.x) hergestellt werden, werden diese direkt aufeinanderfolgend hergestellt. Beispielsweise kann noch genau eine weitere Basislackschicht (B.2.2.x) hergestellt werden, wobei diese dann in der letztlich hergestellten Mehrschichtlackierung direkt unterhalb der Klarlackschicht (K) angeordnet ist und somit als Basislackschicht (B.2.2.z) bezeichnet werden kann (vergleiche auch Abbildung 2). Möglich ist beispielsweise auch, dass zwei weitere Basislackschichten (B.2.2.x) hergestellt werden, wobei dann die direkt auf der Basislackschicht (B.2.2.a) hergestellte Schicht als (B.2.2.b) und die schließlich direkt unterhalb der Klarlackschicht (K) angeordnete Schicht wiederum als (B.2.2.z) bezeichnet werden kann (vergleiche auch Abbildung 3).

Die Basislacke (b.2.2.x) können identisch oder verschieden sein. Möglich ist auch, mehrere Basislackschichten (B.2.2.x) mit demselben Basislack und eine oder mehrere weitere Basislackschichten (B.2.2.x) mit einem oder mehreren anderen Basislacken herzustellen.

Die aufgebrachten Basislacke (b.2.2.x) werden in der Regel für sich und/oder miteinander abgelüftet und/oder zwischengetrocknet. Bevorzugt wird auch im Rahmen der Stufe (2.2) bei 15 bis 35°C für eine Dauer von 0,5 bis 30 min abgelüftet und bei 40 bis 90°C für eine Dauer von beispielsweise 1 bis 60 min zwischengetrocknet. Die Abfolge von Ablüften und/oder Zwischentrocknen einzelner oder mehrerer Basislackschichten (B.2.2.x) kann dabei je nach den Anforderungen des Einzelfalls angepasst werden. Die vorbeschriebenen bevorzugten Ablüft- und Zwischentrockungsbedingungen gelten insbesondere für den bevorzugten Fall, dass es sich bei mindestens einem Basislack (b.2.2.x), bevorzugt allen Basislacken (b.2.2.x) um chemisch-thermisch härtbare Einkomponenten-Beschichtungsmittel handelt. Dies schließt aber nicht aus, dass die Basislacke (b.2.2.x) auf andere Weise härtbare Beschichtungsmittel sind und/oder andere Ablüft- und/oder Zwischentrocknungsbedingungen eingesetzt werden.

Einige bevorzugte Varianten der Basislackschichtabfolgen der Basislacke (b.2.2.x) seien wie folgt erläutert.

Variante a) Möglich ist es, eine erste Basislackschicht durch elektrostatische Sprühapplikation (ESTA) eines ersten Basislacks herzustellen und durch pneumatische Spritzapplikation desselben Basislacks eine weitere Basislackschicht direkt auf der ersten Basislackschicht herzustellen. Zwar basieren damit beide Basislackschichten auf demselben Basislack, jedoch erfolgt der Auftrag offensichtlich in zwei Stufen, so dass der entsprechende Basislack im Sinne des erfindungsgemäßen Verfahrens einem ersten Basislack (b.2.2.a) und einem weiteren Basislack (b.2.2.z) entspricht. Vorder pneumatischen Applikation wird die erste Basislackschicht bevorzugt kurz abgelüftet, beispielsweise bei 15 bis 35°C für 0,5 bis 3 min. Nach der pneumatischen Applikation wird dann bei beispielsweise 15 bis 35°C für 0,5 bis 30 min abgelüftet und bei dann bei 40 bis 90°C für eine Dauer von 1 bis 60 min zwischengetrocknet. Der beschriebene Aufbau wird häufig auch als ein in zwei Aufträgen (einmal ESTA, einmal pneumatisch) hergestellter einschichtiger Basislackschicht-Aufbau bezeichnet. Da aber insbesondere in der realen Serienlackierung aufgrund der technischen Gegebenheiten in einer Lackieranlage zwischen dem ersten Auftrag und dem zweiten Auftrag immer eine gewisse Zeitspanne vergeht, bei der das Substrat, beispielsweise die Automobilkarosse, bei beispielsweise 15 bis 35°C konditioniert und damit abgelüftet wird, ist die Charakterisierung dieses Aufbaus als zweischichtiger Basislackaufbau formal eindeutiger. Diese Variante der Stufe (2.2) wird bevorzugt dann gewählt, wenn der eingesetzte Basislack (b.2.2.x) (beziehungsweise die beiden eingesetzten, identischen Basislacke (b.2.2.a) und (b.2.2.z)) wie unten beschriebene Effektpigmente enthält. Während der ESTA-Auftrag einen guten Materialübertrag beziehungsweise einen nur geringen Lackverlust bei der Applikation garantieren kann, wird durch die dann folgende pneumatische Applikation eine gute Ausrichtung der Effektpigmente und damit gute Eigenschaften der Gesamtlackierung, insbesondere ein hoher Flop, erreicht.

Variante b) Möglich ist auch, eine erste Basislackschicht durch elektrostatische Sprühapplikation (ESTA) eines ersten Basislacks direkt auf der gehärteten Elektrotauchlackschicht herzustellen, diesen wie oben beschrieben abzulüften und/oder zwischenzutrocken und anschließend durch direktes Aufbringen eines vom ersten Basislack verschiedenen zweiten Basislacks eine zweite Basislackschicht herzustellen. Der zweite Basislack kann dabei auch wie unter Variante a) beschrieben zunächst durch elektrostatische Sprühapplikation (ESTA) und dann durch pneumatische Spritzapplikation aufgebracht werden, wodurch direkt auf der ersten Basislackschicht zwei direkt aufeinanderfolgende Basislackschichten hergestellt werden, die beide auf dem zweiten Basislack basieren. Zwischen und/oder nach den Aufträgen kann natürlich wieder abgelüftet und/oder zwischengetrocknet werden. Die Variante (b) der Stufe (2.2) wird bevorzugt dann gewählt, wenn zunächst eine wie unten beschriebene farbvorbereitende Basislackschicht direkt auf der Elektrotauchlackschicht hergestellt werden soll und dann wiederum ein zweifacher Auftrag eines Basislacks enthaltend Effektpigmente oder ein Auftrag eines Basislacks enthaltend Buntpigmente erfolgen soll. Die erste Basislackschicht basiert dann auf dem farbvorbereitenden Basislack, die zweite und dritte Basislackschicht auf dem Basislack enthaltend Effektpigmente oder die eine weitere Basislackschicht auf einem weiteren Basislack enthaltend Buntpigmente. Variante c) Möglich ist ebenfalls, drei Basislackschichten direkt aufeinander folgend direkt auf der gehärteten Elektrotauchlackschicht herzustellen, wobei die Basislackschichten auf drei verschiedenen Basislacken basieren. Beispielsweise kann eine farbvorbereitende Basislackschicht, eine weitere Schicht basierend auf einem Basislack enthaltend Farb- und/oder Effektpigmente und eine weitere Schicht basierend auf einem zweiten Basislack enthaltend Farb- und/oder Effektpigmente hergestellt werden. Zwischen und/oder nach den einzelnen und/oder nach allen drei Aufträgen kann wiederum abgelüftet und/oder zwischengetrocknet werden.

Im Rahmen der vorliegenden Erfindung bevorzugte Ausführungsformen umfassen also, dass in Stufe (2.2) des erfindungsgemäßen Verfahrens zwei oder drei Basislackschichten hergestellt werden, wobei darunter bevorzugt zwei direkt aufeinanderfolgende Basislackschichten unter Einsatz desselben Basislacks hergestellt werden und dabei ganz besonders bevorzugt die erste dieser beiden Basislackschichten durch ESTA-Applikation und die zweite dieser beiden Basislackschichten durch pneumatische Applikation hergestellt wird. Bevorzugt ist bei der Herstellung eines dreischichtigen Basislackaufbaus dann, dass die direkt auf der gehärteten Elektrotauchlackschicht hergestellte Basislackschicht auf einem farbvorbereitenden Basislack basiert. Die zweite und die dritte Schicht basieren entweder auf ein und demselben Basislack, welcher bevorzugt Effektpigmente enthält, oder auf einem ersten Basislack enthaltend Farb- und/oder Effektpigmente und einem davon verschiedenen zweiten Basislack enthaltend Farb- und/oder Effektpigmente.

Die Basislackschichten (B.2.2.x) werden innerhalb der Stufe (2) des erfindungsgemäßen Verfahrens nicht gehärtet, das heißt bevorzugt nicht Temperaturen von über 100°C für eine Dauer von länger als 1 min ausgesetzt, bevorzugt gar nicht Temperaturen von über 100°C ausgesetzt. Dies ergibt sich eindeutig und unmittelbar aus der weiter unten beschriebenen Stufe (4) des erfindungsgemäßen Verfahrens. Da die Basislackschichten erst in der Stufe (4) gehärtet werden, können sie nicht bereits in der Stufe (2) gehärtet werden, denn dann wäre die Härtung in Stufe (4) nicht mehr möglich.

Der Auftrag der Basislacke (b.2.1) und (b.2.2.x) erfolgt so, dass die Basislackschicht (B.2.1) und die einzelnen Basislackschichten (B.2.2.x) nach der in Stufe (4) erfolgten Härtung eine Schichtdicke von beispielsweise 5 bis 40 Mikrometer, bevorzugt 6 bis 35 Mikrometer, insbesondere bevorzugt 7 bis 30 Mikrometer aufweisen. In der Stufe (2.1) werden bevorzugt höhere Schichtdicken von 15 bis 40 Mikrometern, bevorzugt 20 bis 35 Mikrometern hergestellt. In der Stufe (2.2) haben die einzelnen Basislackschichten eher vergleichsweise geringere Schichtdicken, wobei der Gesamtaufbau dann wieder Schichtdicken aufweist, die in der Größenordnung der einen Basislackschicht (B.2.1) liegen. Beispielsweise hat im Falle von zwei Basislackschichten die erste Basislackschicht (B.2.2.a) bevorzugt Schichtdicken von 5 bis 35, insbesondere 10 bis 30 Mikrometer, die zweite Basislackschicht (B.2.2.z) bevorzugt Schichtdicken von 5 bis 30 Mikrometern, insbesondere 10 bis 25 Mikrometern.

In Stufe (3) des erfindungsgemäßen Verfahrens wird eine Klarlackschicht (K) direkt auf (3.1) der Basislackschicht (B.2.1) oder (3.2) der obersten Basislackschicht (B.2.2.z) hergestellt. Diese Herstellung erfolgt durch entsprechendes Aufbringen eines Klarlacks (k).

Bei dem Klarlack (k) kann es sich um ein dem Fachmann in diesem Sinne bekanntes an sich beliebiges transparentes Beschichtungsmittel handeln. Es handelt sich dabei um wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke. Bevorzugt sind lösungsmittelbasierte Klarlacke.

Die eingesetzten Klarlacke (k) können insbesondere chemisch-thermisch und/oder chemisch-aktinisch härtbar sein. Insbesondere sind sie chemisch-thermisch härtbar und fremdvernetzend. Bevorzugt sind Zweikomponenten-Klarlacke.

Die transparenten Beschichtungsmittel enthalten also üblicherweise und bevorzugt mindestens ein (erstes) Polymer als Bindemittel mit funktionellen Gruppen sowie mindestens einen Vernetzer mit einer zu den funktionellen Gruppen des Bindemittels komplementärer Funktionalität. Bevorzugt wird zumindest ein hydroxyfunktionelles Poly(meth)acrylatpolymer als Bindemittel und ein Polyisocyanat als Vernetzungsmittel eingesetzt.

Geeignete Klarlacke sind beispielsweise beschrieben in WO 2006042585 A1, WO 2009077182 A1 oder auch WO 2008074490 A1.
Der Klarlack (k) wird durch die dem Fachmann bekannten Methoden zur Applikation von flüssigen Beschichtungsmitteln aufgebracht, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), und elektrostatischer Sprühauftrag (ESTA).

Der Klarlack (k) beziehungsweise die entsprechende Klarlackschicht (K) wird nach dem Auftrag bevorzugt bei 15 bis 35°C für eine Dauer von 0,5 bis 30 min abgelüftet beziehungsweise zwischengetrocknet. Solche Ablüft- beziehungsweise Zwischentrockungsbedingungen gelten insbesondere für den bevorzugten Fall, dass es sich bei dem Klarlack (k) um ein chemisch-thermisch härtbares Zweikomponenten-Beschichtungsmittel handelt. Dies schließt aber nicht aus, dass der Klarlack (k) ein auf andere Weise härtbares Beschichtungsmittel ist und/oder andere Ablüftbeziehungsweise Zwischentrockungsbedingungen eingesetzt werden.

Der Auftrag des Klarlacks (k) erfolgt so, dass die Klarlackschicht nach der in Stufe (4) erfolgten Härtung eine Schichtdicke von beispielsweise 15 bis 80 Mikrometer, bevorzugt 20 bis 65 Mikrometer, insbesondere bevorzugt 25 bis 60 Mikrometer aufweist.

Selbstverständlich ist im Rahmen des erfindungsgemäßen Verfahrens nicht ausgeschlossen, dass nach der Applikation des Klarlacks (k) noch weitere Beschichtungsmittel, beispielsweise weitere Klarlacke, aufgebracht werden und auf diese Weise weitere Beschichtungsschichten, beispielsweise weitere Klarlackschichten, hergestellt werden. Solche weiteren Beschichtungsschichten werden dann ebenfalls in der nachstehend beschriebenen Stufe (4) gehärtet. Bevorzugt wird allerdings nur der eine Klarlack (k) aufgebracht und dann wie in Stufe (4) beschrieben gehärtet.

In Stufe (4) des erfindungsgemäßen Verfahrens erfolgt eine gemeinsame Härtung der der (4.1) Basislackschicht (B.2.1) und der Klarlackschicht (K) oder (4.2) der Basislackschichten (B.2.2.x) und der Klarlackschicht (K).

Die gemeinsame Härtung erfolgt bevorzugt bei Temperaturen von 100 bis 250°C, bevorzugt 100 bis 180°C für eine Dauer von 5 bis 60 min, bevorzugt 10 bis 45 min. Solche Härtungsbedingungen gelten insbesondere für den bevorzugten Fall, dass die Basislackschicht (B.2.1) oder mindestens eine der Basislackschichten (B.2.2.x), bevorzugt alle Basislackschichten (B.2.2.x) auf einem chemisch-thermisch härtbaren Einkomponenten-Beschichtungsmittel basieren. Denn wie oben beschrieben werden solche Bedingungen in der Regel benötigt, um eine wie oben beschriebene Härtung eines solchen Einkomponenten-Beschichtungsmittels zu erreichen. Handelt es sich bei dem Klarlack (k) beispielsweise ebenfalls um ein chemisch-thermisch härtbares Einkomponenten-Beschichtungsmittel, wird die entsprechende Klarlackschicht (K) bei diesen Bedingungen selbstverständlich ebenfalls gehärtet. Selbiges gilt augenscheinlich für den bevorzugten Fall, dass der Klarlack (k) chemisch-thermisch härtbares Zweikomponenten-Beschichtungsmittel ist.

Das zuvor Gesagte schließt aber nicht aus, dass die Basislacke (b.2.1) und (b.2.2.x) sowie die Klarlacke (k) auf andere Weise härtbare Beschichtungsmittel sind und/oder andere Härtungsbedingungen eingesetzt werden.

Nach Beendigung der Stufe (4) des erfindungsgemäßen Verfahrens resultiert eine erfindungsgemäße Mehrschichtlackierung.

### Die erfindungsgemäß einzusetzenden Basislacke

Der erfindungsgemäß einzusetzende Basislack (b.2.1) enthält eine spezielle wässrige Dispersion umfassend mindestens ein spezielles Mischpolymerisat (MP), bevorzugt genau ein Mischpolymerisat (MP).

Ein Mischpolymerisat im Sinne der vorliegenden Erfindung bezeichnet Polymerisate, die aus verschiedenen Polymerarten, beispielsweise einem Polyurethan und einem (Meth)acrylatpolymerisat aufgebaut sind. Es sind dabei ausdrücklich sowohl Polymerisate eingeschlossen, welche kovalent aneinander gebunden sind, als auch solche, bei denen die verschiedenen Polymere durch Adhäsion aneinander gebunden sind. Auch Kombinationen von beiden Arten der Bindung sind von dieser Definition erfasst. Über die Bezeichnung "(Meth)Acrylat" sind Acrylate, Methacrylate sowie Mischungen hiervon erfasst. Die Begriffe Polymer und Polymerisat sind inhaltsgleich und damit austauschbar.

Das Mischpolymerisat (MP) ist herstellbar durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
   wobei
   a. ein wasserlöslicher Initiator verwendet wird,
   b. die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
   c. die Mischung der olefinisch ungesättigten Monomere mindestens ein mehrfach olefinisch ungesättigtes Monomer enthält.

Im ersten Herstellungsschritt wird eine wässrige Dispersion eines Polyurethanharzes vorgelegt.

Geeignete gesättigte oder ungesättigte Polyurethanharze werden beispielsweise beschrieben in
- der deutschen Patentanmeldung DE 199 48 004 A1, Seite 4, Zeile 19 bis Seite 11 Zeile 29 (Polyurethanpräpolymer B1)
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden zum einen vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt. Besonders bevorzugt sind aliphatische und aliphatischcycloaliphatische Polyurethanharze.

Als Alkohol-Komponente für die Herstellung der Polyurethanharze werden bevorzugt die dem Fachmann bekannten, gesättigten und ungesättigten Polyole sowie gegebenenfalls in untergeordneten Mengen auch Monoalkohole eingesetzt. Es werden insbesondere Diole und gegebenenfalls in untergeordneten Mengen Triole zur Einführung von Verzweigungen eingesetzt. Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol eingesetzt. Das zahlenmittlere Molekulargewicht wird im Rahmen der vorliegenden Erfindung, sofern nicht spezifisch anders angegeben, mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bevorzugt handelt es sich bei dem in wässriger Dispersion vorgelegten Polyurethan um ein hydrophil stabilisiertes Polyurethan. Zur hydrophilen Stabilisierung beziehungsweise zur Erhöhung der Dispergierbarkeit in wässrigem Medium kann das Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   oder
- nicht ionische hydrophile Gruppen (nicht-ionische Modifizierung)
   oder
- Kombinationen der zuvor genannten Gruppen.

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die ionischen oder potentiell ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Bevorzugt wird mindestens ein organisches Lösemittel zu der vorgelegten Polyurethandispersion gegeben, wobei das organische Lösemittel bevorzugt in jedem Verhältnis mit Wasser und in jedem Verhältnis mit der Mischung von olefinisch ungesättigten Monomeren mischbar ist. Geeignete organische Lösemittel sind N-Methylpyrrolidon, N-Ethylpyrrolidon und Etheralkohole wie insbesondere Methoxypropanol, wobei zu beachten ist, dass sich bereits aus ökologischen Gründen der Verzicht auf pyrrolidonbasierte Lösemittel anbieten kann. Die Menge des organischen Lösemittels wird aber so gewählt, dass der wässrige Charakter der Dispersion erhalten bleibt.

Im zweiten Herstellungsschritt wird eine Polymerisation einer Mischung von olefinisch ungesättigten Monomeren in Gegenwart des Polyurethans nach den Methoden der sogenannten radikalischen Emulsionspolymerisationen in Gegenwart mindestens eines Polymerisationsinitiators durchgeführt.

Bei dem verwendeten Polymerisationsinitiator muss es sich um einen wasserlöslichen Initiator handeln. Beispiele geeigneter Initiatoren sind Kalium-, Natrium- oder Ammoniumperoxodisulfat, sowie Wasserstoffperoxid, tert.-Butylhydroperoxid, 2,2'-Azobis(2-amidoisopropan)dihydrochlorid, 2,2'-Azo- bis-(N,N'-dimethylenisobutyramidin)-dihydrochlorid oder 2,2'-Azo- bis-(4-cyano)pentansäure). Die Initiatoren werden entweder allein oder in Mischung verwendet, beispielsweise Mischungen aus Wasserstoffperoxid und Natriumpersulfat.

Auch die bekannten Redox-Initiatorsysteme können als Polymerisationinitiatoren verwendet werden. Solche Redox-Initiatorsysteme enthalten mindestens eine peroxidhaltige Verbindung in Kombination mit einem Redox-Coinitiator beispielsweise reduzierend wirkenden Schwefelverbindungen, beispielsweise Bisulfite, Sulfite, Thiosulfate, Dithionite oder Tetrathionate von Alkalimetallen und Ammoniumverbindungen, Natriumhydroxymethansulfinat-Dihydrat und/oder Thioharnstoff. So kann man Kombinationen von Peroxodisulfaten mit Alkalimetall- oder Ammoniumhydrogensulfiten einsetzen, beispielsweise Ammoniumperoxidisulfat und Ammoniumdisulfit. Das Gewichtsverhältnis von peroxidhaltigen Verbindungen zu den Redox-Coinitiatoren beträgt vorzugsweise 50 : 1 bis 0,05 : 1. In Kombination mit den Initiatoren bzw. den Redoxinitiatorsystemen können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt- IIchlorid, Nickel-II-sulfat, Kupfer-I-chlorid, Mangan-II-acetat, Vanadium-III-acetat, Mangan-II-chlorid. Bezogen auf die Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30% Wasserstoffperoxid und 0,1 bis 500 ppm Mohrsches Salz.

Die Initiatoren werden bevorzugt in einer Menge von 0,05 bis 20 Gew.-%, bevorzugt 0,05 bis 10, besonders bevorzugt von 0,1 bis 5 Gew.-% bezogen auf das Gesamtgewicht der zur Polymerisation eingesetzten olefinisch ungesättigten Monomere eingesetzt. Die Begriffe Gesamtmenge und Gesamtgewicht sind gleichbedeutend.

Die Verwendung des wasserlöslichen Initiators bedingt, dass olefinisch ungesättigte Monomere, die zu der vorgelegten wässrigen Dispersion gegeben werden, sofort zu Oligomeren reagieren können. Diese Oligomere haben eine geringere Tendenz in die Polyurethanteilchen der vorgelegten Dispersion einzudringen als die kleineren Monomere.

Die Polymerisation wird zweckmäßigerweise beispielsweise bei einer Temperatur von größer 0 bis 160°C, vorzugsweise 60 bis 95°C durchgeführt.

Dabei wird bevorzugt unter Ausschluss von Sauerstoff gearbeitet, vorzugsweise in einem Stickstoffstrom. In der Regel wird die Polymerisation bei Normaldruck durchgeführt, jedoch ist auch die Anwendung von niedrigeren Drucken oder höheren Drucken möglich, insbesondere wenn Polymerisationstemperaturen angewendet werden, die oberhalb des Siedepunktes der Monomere und/oder der organischen Lösungsmittel liegen.

Die Herstellung der erfindungsgemäß einzusetzenden Mischpolymerisate (MP) erfolgt durch radikalische wäßrige Emulsionspolymerisation, wobei dem Reaktionsmedium Tenside oder Schutzkolloide zugesetzt werden können. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S 411 ff.

Wichtig für die Herstellung der erfindungsgemäß einzusetzenden wässrigen Dispersionen enthaltend das Mischpolymerisat (MP) ist die Kontrolle der Bedingungen der Polymerisationsreaktion der Mischung von olefinisch ungesättigten Monomeren in Gegenwart des Polyurethans. Diese wird so durchgeführt, dass es sich um eine so genannte "verhungernde Polymerisation" (auch als "starve feed", "starve fed" oder "starved feed" Polymerisation bekannt) handelt.
Als verhungernde Polymerisation im Sinne der vorliegenden Erfindung wird eine Emulsionspolymerisation angesehen bei der der Gehalt an Restmonomeren in der Reaktionslösung während der Reaktionsdauer minimiert wird, das heißt die Zudosierung der olefinisch ungesättigten Monomere so erfolgt, dass in der Reaktionslösung eine Konzentration von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge an zur Polymerisation eingesetzten olefinisch ungesättigten Monomeren, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%, jeweils bezogen auf die Gesamtmenge an zur Polymerisation eingesetzten olefinisch ungesättigten Monomeren. Beispielsweise kann der höchste während der Reaktion zu detektierende Anteil (beziehungsweise die Konzentration) bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Der Begriff Konzentration ist in diesem Zusammenhang also offensichtlich gleichbedeutend mit dem Begriff Anteil.

Die Konzentration der Monomere in der Reaktionslösung, im Folgenden als freie Monomere bezeichnet, kann auf verschiedene Art und Weisen gesteuert werden.

Eine Möglichkeit die Konzentration der freien Monomere gering zu halten ist es, die Dosiergeschwindigkeit der Mischung der olefinisch ungesättigten Monomere sehr niedrig zu wählen. Wenn die Zudosiergeschwindigkeit so niedrig ist, dass alle Monomere möglichst schnell reagieren können sobald sie in der Reaktionslösung sind, kann sichergestellt werden, dass die Konzentration der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Die Initiatormenge ist ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmen kann, ist der Aufbau der Monomere, das heißt insbesondere deren strukturelle Eigenschaften und die sich daraus ableitende Reaktivität.

Die Kontrolle der Konzentration der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen insbesondere dem Ziel die Konzentration der freien Monomere unter den oben genannten Grenzen zu halten.

Die Konzentration der Monomere in der Reaktionslösung kann dabei zu jedem Zeitpunkt der Reaktion gaschromatographisch bestimmt werden. Typische Parameter für die gaschromatographische Bestimmung sind die folgenden: 50m Silica-Kapillarsäule mit Polyethylenglykol-Phase oder 50m Silica-Kapillarsäule mit Polydimethylsiloxan-Phase, Trägergas Helium, Splitinjektor 150°C, Ofentemperatur 40 bis 220°C, Flammionisationsdetektor, Detektortemperatur 275°C, interner Standard Isobutylacrylat. Die Bestimmung der Konzentration der Monomere erfolgt im Rahmen der vorliegenden Erfindung bevorzugt gaschromatograhisch, insbesondere unter Einhaltung der oben genannten Parameter.
Sollte bei dieser Analyse eine Konzentration an freien Monomeren bestimmt werden, die nah an den Grenzwert für die verhungernde Polymerisation kommt, beispielsweise aufgrund eines hohen Anteils olefinisch ungesättigter Monomere, die eine geringe Reaktivität besitzen, können die oben genannten Parameter zur Steuerung der Reaktion genutzt werden. Es kann in diesem Fall beispielsweise die Dosiergeschwindigkeit der Monomere verringert und/oder die Menge an Initiator erhöht werden.

Geeignete olefinisch ungesättigte Monomere können einfach oder mehrfach olefinisch ungesättigt sein. Bevorzugt sind mindestens ein einfach olefinisch ungesättigtes und mindestens ein mehrfach olefinisch ungesättigtes Monomer enthalten.

Beispiele geeigneter einfach olefinisch ungesättigter Monomere umfassen vinylische einfach olefinisch ungesättigte Monomere wie insbesondere (meth)acrylat-basierte einfach olefinisch ungesättigte Monomere und Allylverbindungen. Beispiele sind auch alpha-beta ungesättigte Carbonsäuren. Bevorzugt werden jedenfalls, aber nicht zwingend ausschließlich, (meth)acrylat-basierte einfach olefinisch ungesättigte Monomere eingesetzt.

Bei den (meth)acrylat-basierten, einfach olefinisch ungesättigten Monomeren kann es sich beispielsweise um (Meth)acrylsäure und Ester, Nitrile, oder Amide der (Meth)acrylsäure handeln.

Bevorzugt sind Ester der (Meth)acrylsäure, mit einem Rest R, der nicht olefinisch ungesättigt ist. 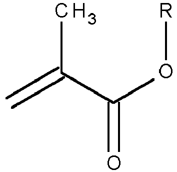 bzw.

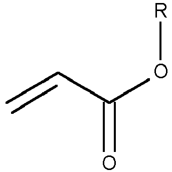

Der Rest R kann aliphatisch oder aromatisch sein. Bevorzugt ist der Rest R aliphatisch. Der Rest R kann beispielsweise ein Alkylrest sein, oder Heteroatome enthalten. Beispiele für Reste R, die Heteroatome enthalten sind Ether. Bevorzugt werden jedenfalls, aber nicht zwingend ausschließlich, Monomere eingesetzt, bei denen der Rest R ein Alkylrest ist.

Für den Fall, dass R ein Alkylrest ist, kann es sich beispielsweise um einen linearen, verzweigten oder cyclischen Alkylrest handeln. In allen drei Fällen kann es sich um unsubstituierte oder um mit funktionellen Gruppen substituierte Alkylreste handeln. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem unsubstituierten Alkylrest sind Methyl(meth)acrylat, Ethyl(meth)acrylat, Propyl(meth)acrylat, Isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Geeignete einfach ungesättigte Ester der (Meth)acrylsäure mit einem substituierten Alkylrest können bevorzugt mit einer oder mehreren Hydroxylgruppen substitutiert sein.

Besonders bevorzugte einfach ungesättigte Ester der (Meth)acrylsäure mit einem mit einer oder mehreren Hydroxylgruppen substituierten Alkylrest sind 2-Hydroxyethyl(meth)acrylat, 2-Hydroxypropyl(meth)acrylat, 3- Hydroxypropyl (meth)acrylat, 3-Hydroxybutyl(meth)acrylat sowie 4-Hydroxybutyl(meth)acrylat.

Bei möglichen weiteren vinylischen einfach ungesättigten Monomeren handelt es sich um Monomere mit einem Rest R' an der Vinylgruppe, der nicht olefinisch ungesättigt ist.

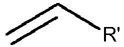

Der Rest R' kann aliphatisch oder aromatisch sein, wobei aromatische Reste bevorzugt sind.

Der Rest R' kann ein Kohlenwasserstoffrest sein, oder Heteroatome enthalten. Beispiele für Reste R', die Heteroatome enthalten sind Ether, Ester, Amide, Nitrile und Heterocylen. Bevorzugt handelt es sich beim Rest R' um einen Kohlenwasserstoffrest. Für den Fall, dass es sich bei R' um einen Kohlenwasserstoffrest handelt, kann dieser mit Heteroatomen substituiert oder unsubstituiert sein, wobei unsubstituierte Reste bevorzugt sind. Bevorzugt ist der Rest R' ein aromatischer Kohlenwasserstoffrest.

Besonders bevorzugte weitere vinylische olefinisch ungesättigte Monomere sind vinylaromatische Kohlenwasserstoffe, insbesondere Vinyltoluol, alpha-Methylstyrol und insbesondere Styrol.

Weitere bevorzugte Monomere, die Heteroatome enthalten, sind olefinisch ungesättigte Monomere wie Acrylnitril, Methacrylnitril, Acrylamid, Methacrylamid, N-Dimethylacrylamid, Vinylacetat, Vinylpropionat, Vinylchlorid, N-Vinylpyrrolidon, N-Vinylcaprolactam, N-Vinylformamid, N-Vinylimidazol und N-Vinyl-2-Methylimidazolin.

Beispiele geeigneter mehrfach olefinisch ungesättigter Monomere umfassen Ester der (Meth)acrylsäure mit einem olefinisch ungesättigten Rest R" und Allylether von mehrwertigen Alkoholen. 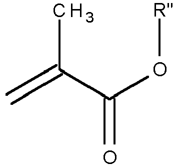 bzw.

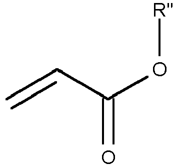

Bei dem Rest R" kann es sich beispielsweise um einen Allylrest oder um einen (Meth)acrylsäureesterrest handeln.

Bevorzugte mehrfach olefinisch ungesättigte Monomere sind Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat, Hexandioldi(meth)acrylat und Allyl(meth)acrylat.

Bevorzugte mehrfach olefinisch ungesättigte Verbindungen sind auch Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylatdiallylether, Pentaerythrittri(meth)acrylatmonoallylether, Pentaerythritdi(meth)acrylatdiallylether, Pentaerythrit(meth)acrylattriallylether, Triallylsaccharose, und Pentaallylsaccharose.

Besonders bevorzugt wird Allylmethacrylat als mehrfach olefinisch ungesättigtes Monomer eingesetzt.

Die Mischung der olefinisch ungesättigten Monomere enthält mindestens ein mehrfach olefinisch ungesättigtes Monomer. Bevorzugt enthält die Mischung der olefinisch ungesättigten Monomere außerdem ein oder mehrere einfach ungesättigte Ester der (Meth)acrylsäure mit einem unsubstituierten Alkylrest.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 1,0 mol-% mehrfach olefinisch ungesättigte Monomere. Bevorzugt ist der Rest der olefinisch ungesättigten Monomere einfach ungesättigt.

Bevorzugt enthält die Mischung der olefinisch ungesättigten Monomere 0,1 bis 6,0 mol-%, besonders bevorzugt 0,1 bis 2,0 mol-%, ganz besonders bevorzugt 0,1 bis 2,0 mol-% Allylmethacrylat. Besonders bevorzugt sind außer Allylmethacrylat keine weiteren mehrfach olefinisch ungesättigten Monomere in der Mischung enthalten.

Bevorzugt enthält die Mischung von olefinisch ungesättigten Monomeren weniger als 10,0 Gew.-%, besonders bevorzugt weniger als 5,0 Gew.-% vinylaromatische Kohlenwasserstoffe, bezogen auf die Gesamtmenge an bei der Polymerisation eingesetzten olefinisch ungesättigten Monomeren. Ganz besonders bevorzugt sind keine vinylaromatischen Kohlenwasserstoffe in der Mischung der olefinisch ungesättigten Monomere enthalten. Besonders bevorzugt ist es, wenn weniger als 10,0 Gew.-%, besonders bevorzugt weniger als 5,0 Gew.-%, bezogen auf die Gesamtmenge an bei der Polymerisation eingesetzten olefinisch ungesättigten Monomeren, von olefinisch ungesättigten Monomeren mit aromatischen Gruppen eingesetzt werden. Insbesondere sind keine olefinisch ungesättigten Monomere mit aromatischen Gruppen in der Mischung der olefinisch ungesättigten Monomere enthalten.

Daraus folgt, dass die oben als bevorzugt angegebenen vinylaromatische Kohlenwasserstoffe, insbesondere Vinyltoluol, alpha-Methylstyrol und Styrol, natürlich nur innerhalb der Gruppe der Monomere enthaltend aromatische Gruppen bevorzugt sind. Trotzdem gilt im Sinne der Erfindung, dass diese Monomere bevorzugt nicht eingesetzt werden. Sollte sich dann im Einzelfall der Einsatz solcher Monomere trotzdem anbieten, werden bevorzugt die als bevorzugt gekennzeichneten Monomere enthaltend aromatische Gruppen eingesetzt.

In einer bevorzugten Ausführungsform enthält die Mischung von olefinisch ungesättigten Monomeren:
- 98,0 bis 99,5 Gew.-% von einem oder mehreren einfach ungesättigten Estern der (Meth)acrylsäure mit unsubstituierten Alkylresten, wobei die Alkylreste bevorzugt 1 bis 10 Kohlenstoffatomen haben, und
- 0,5 bis 2,0 Gew.-% von einem oder mehreren mehrfach ungesättigten Estern der (Meth)acrylsäure,
jeweils bezogen auf die Gesamtmenge an bei der Polymerisation eingesetzten olefinisch ungesättigten Monomeren.

Bevorzugt wird der Mischung von olefinisch ungesättigten Monomeren mindestens ein Lösemittel zugesetzt, wobei das Lösemittel bevorzugt in jedem Verhältnis mit Wasser und in jedem Verhältnis mit der Mischung von olefinisch ungesättigten Monomeren mischbar ist. Geeignete organische Lösemittel sind N-Methylpyrrolidon, N-Ethylpyrrolidon und Etheralkohole wie insbesondere Methoxypropanol, wobei zu beachten ist, dass sich bereits aus ökologischen Gründen der Verzicht auf pyrrolidonbasierte Lösemittel anbieten kann. Die Menge des organischen Lösemittels wird aber so gewählt, dass der wässrige Charakter der letztlich erhaltenen Dispersion erhalten bleibt.

Durch den beschriebenen Herstellungsprozess haben die Mischpolymerisate in der erfindungsgemäßen wässrigen Dispersion insbesondere einen Kern-Schale-Aufbau, der durch den angegebenen Herstellungsprozess erreicht werden kann. Der Kern-Schale Aufbau ist dabei charakterisiert durch einen Kern, enthaltend mindestens ein Polyurethan, und eine Schale, enthaltend mindestens Polymer welches durch Polymerisation von olefinisch ungesättigten Monomeren erhalten wurde.

Der beschriebene Kern-Schale-Aufbau wird durch die speziellen Reaktionsbedingungen der verhungernden Polymerisation erreicht. Es sind während der gesamten Reaktionsdauer nie größere Mengen an olefinisch ungesättigten Monomeren in Gegenwart des vorgelegten Polyurethans vorhanden, welche in das Polyurethanteilchen eindringen könnten. Durch die während der Monomerzugabe in der wässrigen Phase immer vorhandenen Radikale, die der wasserlösliche Initiator bereitstellt, werden bei Zugabe sofort Oligomere gebildet, die nicht mehr in das Polyurethan eindringen können. Diese polymerisieren sodann auf der Oberfläche des Polyurethans.

In einer bevorzugten Ausführungsform beträgt das Gewichtsverhältnis von Kern zu Schale 80:20 bis 20:80, besonders bevorzugt 60:40 bis 40:60. Gemeint ist hierbei das Verhältnis der Mengen an zur Herstellung von Kern (Schritt (i), Polyurethan) und Schale (Schritt (ii), Mischung von olefinisch ungesättigten Monomeren) eingesetzten Komponenten.

Bevorzugt haben die Mischpolymerisate (MP) in der wässrigen Dispersion eine Teilchengröße (z-Mittel) von 60 bis 130, besonders bevorzugt von 70 bis 115 nm, gemessen mittels Photonkorrelationsspektroskopie mit einem Malvern Nano S90 (Fa. Malvern Instruments) bei 25 ± 1 °C. Das Gerät, ausgestattet mit einem 4mW He-Ne Laser bei einer Wellenlänge von 633nm, deckt einen Größenbereich von 1 bis 3000 nm ab.

Die Mischpolymerisate (MP) können bevorzugt vernetzt sein. Der Gelanteil der erfindungsgemäßen wässrigen Dispersion beträgt bevorzugt 40 bis 97 Gew.-%, besonders bevorzugt 75 bis 90 Gew.-%, jeweils bezogen auf den Festkörper der Dispersion.

Der Gelanteil kann gravimetrisch bestimmt werden, indem die Dispersion gefriergetrocknet wird, die Gesamtmasse des gefriergetrockneten Polymers bestimmt wird (entspricht im Rahmen der Bestimmung des Gelanteils dem Festkörper der Dispersion) und das Polymer anschließend 24 Stunden bei 25°C in einem Überschuss an Tetrahydrofuran (Verhältnis Tetrahydrofuran zu gefriergetrocknetem Polymer = 300 : 1) extrahiert wird. Der unlösliche Anteil wird abgetrennt und bei 50°C vier Stunden lang im Umluftofen getrocknet. Im Anschluss wird der getrocknete, unlösliche Anteil gewogen und der Quotient mit der Gesamtmasse des gefriergetrockneten Polymers gebildet. Der erhaltene Wert entspricht dem Gelanteil.

Die gewichtsmittlere Molmasse der Mischpolymerisate (MP) beträgt bevorzugt 3*10⁷ g/mol bis 8,5*10⁹ g/mol, wobei die gewichtsmittlere Molmasse mit Kleinwinkel-Laserlichtstreuung ermittelt werden kann.

Die Säurezahl der Mischpolymerisate (MP) beträgt bevorzugt 0 bis 220 mg KOH/g Festharz, bevorzugt 0 bis 40 mg KOH / g Festharz, besonders bevorzugt 0 bis 25 mg KOH/g Festharz. Die OH-Zahl ist bevorzugt kleiner 70, bevorzugt kleiner 20 mg KOH/g Festharz. Die Begriffe Festharz und Festkörper in Bezug auf ein Polymer beziehungsweise eine Dispersion eines Polymers sind bedeutungsgleich. Es handelt sich also insbesondere um den wie weiter unten erläuterten Festkörper beziehungsweise Festkörpergehalt einer Polymerdispersion.

Die Säurezahl kann in Anlehnung an die DIN EN ISO 2114 in homogener Lösung aus THF / Wasser (9 Vol.-Teile THF und 1 Vol.-Teil destilliertes Wasser) mit ethanolischer Kaliumhydroxid-Lösung bestimmt werden.

Die OH-Zahl kann in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt werden, wobei der verbliebene Überschuss an Essigsäureanhydrid nach Acetylierung vollständig hydrolysiert wird und die Essigsäure mit alkoholischer Kaliumhydroxid-Lösung potentiometrisch zurücktitriert wird.

Die wässrigen Dispersionen des mindestens einen Mischpolymerisats (MP) weisen bevorzugt einen Festkörpergehalt von 15 bis 45 Gew.-%, insbesondere bevorzugt 25 bis 35 Gew.-% auf. Solche Festkörpergehalte können problemlos durch den Einsatz entsprechender Mengen von organischen Lösungsmitteln und insbesondere Wasser bei der Herstellung der Mischpolymerisate und/oder durch entsprechende Verdünnung nach der Herstellung eingestellt werden.

Der Anteil der Mischpolymerisate (MP) liegt vorzugsweise im Bereich von 2,0 bis 30,0 Gew.-%, bevorzugt 3,0 bis 20,0 Gew.-%, besonders bevorzugt 4,0 bis 15,0 Gew.-%, jeweils bezogen auf das Gesamtgewicht des wässrigen Basislacks (b.2.1).

Der erfindungsgemäß einzusetzende Basislack (b.2.1) enthält bevorzugt mindestens ein Pigment. Hierunter zu verstehen sind an sich bekannte farbgebende und/oder optisch effektgebende Pigmente. Besonders bevorzugt enthält er ein optisch effektgebendes Pigment.

Solche Farbpigmente und Effektpigmente sind dem Fachmann werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.
Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Der Anteil der Pigmente liegt vorzugsweise im Bereich von 1,0 bis 40,0 Gew.-%, bevorzugt 2,0 bis 20,0 Gew.-%, besonders bevorzugt 5,0 bis 15,0 Gew.-%, jeweils bezogen auf das Gesamtgewicht des wässrigen Basislacks (b.2.1).

Der wässrige Basislack (b.2.1) enthält bevorzugt noch mindestens ein von den Mischpolymerisaten (MP) verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyurethan-Polyacrylate. Bevorzugte Polyurethane sind die bereits oben bei der Beschreibung des Schritts (i) der Herstellung der Mischpolymerisate (MP) genannten Polyurethane. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 beschrieben. Bevorzugte von den Mischpolymerisaten (MP) verschiedene Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell. Bevorzugt enthalten die wässrigen Basislacke (b.2.1) neben dem mindestens einen Mischpolymerisat (MP) eine Kombination aus mindestens einem Polyester und mindestens einem von den Mischpolymerisaten (MP) verschiedenen Polyurethan-Polyacrylat-Mischpolymerisat.

Der Anteil der der weiteren Polymere als Bindemittel, bevorzugt der Kombination aus mindestens einem Polyester und mindestens einem von den Mischpolymerisaten (MP) verschiedenen Polyurethan-Polyacrylat-Mischpolymerisaten, liegt vorzugsweise im Bereich von 1,0 bis 20,0 Gew.-%, bevorzugt 1,5 bis 15,0 Gew.-%, besonders bevorzugt 2,0 bis 10,0 Gew.-%, jeweils bezogen auf das Gesamtgewicht des wässrigen Basislacks (b.2.1).

Zudem enthält der Basislack (b.2.1) bevorzugt mindestens ein an sich bekanntes typisches Vernetzungsmittel. Bevorzugt enthält er als Vernetzungsmittel mindestens ein Aminoplastharz und/oder ein blockiertes Polyisocyanat, bevorzugt ein Aminoplastharz. Unter den Aminoplastharzen sind insbesondere Melaminharze bevorzugt.

Der Anteil der Vernetzungsmittel, insbesondere Aminoplastharze und/oder blockierte Polyisocyanate, besonders bevorzugt Aminoplastharze, darunter bevorzugt Melaminharze, liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des wässrigen Basislacks (b.2.1).

Bevorzugt ist zudem ein Verdicker enthalten. Als Verdicker eignen sich anorganische Verdicker aus der Gruppe der Schichtsilikate. Besonders geeignet sind Lithium-Aluminium-Magnesium Silikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylatCopolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den zuvor beschriebenen Polymeren, beispielsweise den bevorzugten Bindemitteln, verschieden. Bevorzugt sind anorganische Verdicker aus der Gruppe der Schichtsilikate.

Der Anteil der Verdicker liegt vorzugsweise im Bereich von 0,01 bis 5,0 Gew.-%, bevorzugt 0,02 bis 4 Gew.-%, besonders bevorzugt 0,05 bis 3,0 Gew.-%, jeweils bezogen auf das Gesamtgewicht des wässrigen Basislacks (b.2.1).

Darüber hinaus kann der wässrige Basislack (b.2.1) noch mindestens einen Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt. Beispielsweise kann ihr Anteil im Bereich von 1,0 bis 40,0 Gew.-%, bezogen auf das Gesamtgewicht des wässrigen Basislacks (b.2.1), liegen.

Der Festkörpergehalt der Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke (b.2.1) bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks, beispielsweise eines Polyurethanharzes, eines Mischpolymerisats (MP) oder eines Vernetzungsmittels, am Gesamtgewicht des Basislacks festzulegen beziehungsweise vorzubestimmen. Es wird also der Festkörper einer Dispersion eines Polyurethanharzes, eines Mischpolymerisates (MP) oder eines Vernetzungsmittels, welche dem Basislack zugegeben werden soll, bestimmt. Durch Berücksichtigung des Festkörpers der Dispersion und der in dem Basislack eingesetzten Menge der Dispersion kann dann der Anteil der Komponente an der Gesamtkomposition ermittelt beziehungsweise festgelegt werden.

Der Basislack (b.2.1) ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 45 Gew.-%, ganz besonders bevorzugt mindestens 50 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 95 Gew.-%, insbesondere 45 bis 90 Gew.-%, ganz besonders bevorzugt 50 bis 85 Gew.-%, jeweils bezogen auf die Gesamtmenge der enthaltenen Lösemittel.

Dieselbe Definition von wässrig gilt selbstverständlich für alle weiteren im Rahmen der vorliegenden Erfindung beschriebenen Systeme, beispielsweise für den wässrigen Charakter der Elektrotauchlacke (e.1) oder den wässrigen Charakter der wässrigen Dispersionen der Mischpolymerisate (MP).

Die Herstellung der erfindungsgemäß eingesetzten Basislacke (b.2.1) kann unter Einsatz der für die Herstellung von Basislacken üblichen und bekannten Mischverfahren und Mischaggregaten erfolgen.

Für die im Rahmen des erfindungsgemäßen Verfahrens eingesetzten Basislacke (b.2.2.x) gilt, dass mindestens einer dieser Basislacke die für den Basislack (b.2.1) beschriebenen erfindungswesentlichen Merkmale aufweist. Das heißt insbesondere, dass mindestens einer der Basislacke (b.2.2.x) mindestens eine wässrige Dispersion enthaltend mindestens ein Mischpolymerisat (MP) enthält. Auch alle im Rahmen der Beschreibung des Basislacks (b.2.1) beschriebenen bevorzugten Merkmale und Ausführungsformen gelten bevorzugt für mindestens einen der Basislacke (b.2.2.x).

In der weiter oben beschriebenen bevorzugten Variante (a) der Stufe (2.2) des erfindungsgemäßen Verfahrens, in der die beiden eingesetzten Basislacke (b.2.2.x) identisch sind, gelten somit augenscheinlich für beide Basislacke (b.2.2.x), dass sie die für den Basislack (b.2.1) beschriebenen erfindungswesentlichen Merkmale aufweisen. In dieser Variante enthalten die Basislacke (b.2.2.x) bevorzugt wie oben beschriebene Effektpigmente, insbesondere blättchenförmige Aluminiumpigmente. Bevorzugte Anteile sind 2 bis 10 Gew.-%, bevorzugt 3 bis 8 Gew.-%, jeweils bezogen auf das Gesamtgewicht des Basislacks. Er kann aber auch noch weitere Pigmente, das heißt insbesondere Buntpigmente enthalten.

In der weiter oben beschriebenen bevorzugten Variante (b) der Stufe (2.2) des erfindungsgemäßen Verfahrens wird bevorzugt zunächst ein erster Basislack (b.2.2.a) aufgebracht, der auch als farbvorbereitender Basislack bezeichnet werden kann. Er dient also als Grundlage für eine dann folgende Basislackschicht, die dann optimal ihre Funktion der Farb- und/oder Effektgebung erfüllen kann.

In einer ersten besonderen Ausführungsform der Variante (b) ist ein solcher farbvorbereitenden Basislack im Wesentlichen frei von Buntpigmenten und Effektpigmenten. Insbesondere enthält ein solcher Basislack (b.2.2.a) weniger als 2 Gew.-%, bevorzugt weniger als 1 Gew.-% an Buntpigmenten und Effektpigmenten, jeweils bezogen auf das Gesamtgewicht des wässrigen Basislacks. Bevorzugt ist er frei von solchen Pigmenten. Der farbvorbereitende Basislack enthält in dieser Ausführungsform bevorzugt Schwarz- und/oder Weißpigmente, insbesondere bevorzugt beide Arten von diesen Pigmenten. Bevorzugt enthält er 5 bis 20 Gew.-%, bevorzugt 8 bis 12 Gew.-% Weißpigmente und 0,05 bis 1 Gew.-%, bevorzugt 0,1 bis 0,5 Gew.-% Schwarzpigmente, jeweils bezogen auf das Gesamtgewicht des Basislacks. Die sich daraus ergebende graue Farbe, die durch das Verhältnis von Weiß- und Schwarzpigmenten in unterschiedlichen Helligkeitsstufen eingestellt werden kann, stellt für den dann folgenden Basislackschicht-Aufbau eine individuell anpassbare Basis dar, sodass die Farbe und/oder die Effektgebung des folgenden Basislackaufbaus optimal zur Geltung kommen kann. Die Pigmente sind dem Fachmann bekannt und auch weiter oben beschrieben. Als Weißpigment ist hier Titandioxid, als Schwarzpigment Ruß bevorzugt.

Für den Basislack für die zweite oder die zweite und dritte Basislackschicht innerhalb dieser Ausführungsform der Variante (b) gilt bevorzugt das für den unter Variante (a) beschriebenen Basislack (b.2.2.x) Gesagte. Insbesondere enthält er bevorzugt Effektpigmente. Dabei kann sowohl für den farbvorbereitenden Basislack (b.2.2.x) als auch für den zweiten Basislack (b.2.2.x), der bevorzugt Effektpigmente enthält, gelten, dass die für den Basislack (b.2.1) beschriebenen erfindungswesentlichen Merkmale erfüllt sein müssen. Natürlich können auch beide Basislacke (b.2.2.x) diese Merkmale erfüllen.

In einer zweiten besonderen Ausführungsform der vorliegenden Erfindung kann aber auch der farbvorbereitende Basislack (b.2.2.a) Buntpigmente enthalten. Diese Variante bietet sich insbesondere dann an, wenn die resultierende Mehrschichtlackierung einen hoch chromatischen Farbton haben soll, beispielsweise ein sehr farbtiefes Rot oder Gelb. Dabei enthält dann der farbvorbereitende Basislack (b.2.2.a) beispielsweise einen Anteil von 2 bis 6 Gew.-% Buntpigmente, insbesondere Rotpigmente und/oder Gelbpigmente, bevorzugt in Kombination mit 3 bis 15 Gew.-%, bevorzugt 4 bis 10 Gew.-% Weißpigmenten. Der dann in der Folge aufgebrachte mindestens eine weitere Basislack enthält dann augenscheinlich ebenfalls die entsprechenden Buntpigmente, sodass der erste Basislack (b.2.2.a) wiederum der Farbvorbereitung dient. Auch in dieser Ausführungsform kann jeder einzelne, mehrere oder alle der Basislacke (b.2.2.x) ein solcher sein, der die für den Basislack (b.2.1) beschriebenen erfindungswesentlichen Merkmale erfüllt.

Auch in der weiter oben beschriebenen bevorzugten Variante (c) der Stufe (2.2) des erfindungsgemäßen Verfahrens kann jeder einzelne, mehrere oder alle der Basislacke (b.2.2.x) ein solcher sein, der die für den Basislack (b.2.1) beschriebenen erfindungswesentlichen Merkmale erfüllt.

Das erfindungsgemäße Verfahren erlaubt die Herstellung von Mehrschichtlackierungen unter Verzicht auf einen separaten Härtungsschritt. Trotzdem resultieren durch die Anwendung des erfindungsgemäßen Verfahrens Mehrschichtlackierungen, die eine ausgezeichnete Stabilität gegen Nadelstiche aufweisen, sodass auch höhere Schichtdicken der entsprechenden Basislackschichten ohne ästhetischen Qualitätsverlust aufgebaut werden können.

Die Qualität der Stabilität gegen Nadelstiche kann grundsätzlich anhand der Nadelstichgrenze sowie der Anzahl von Nadelstichen bestimmt werden. Die Nadelstichgrenze und deren Bestimmung können wie folgt beschrieben werden: Beim Aufbau einer Mehrschichtlackierung wird die Schichtdicke einer unterhalb der Klarlackschicht angeordneten Basislackschicht, die zudem nicht separat, sondern zusammen mit der Klarlackschicht eingebrannt wird, variiert. Bei dieser Beschichtungsschicht kann es sich beispielsweise um eine direkt auf der Elektrotauchlackschicht angeordnete Schicht und/oder eine direkt unterhalb der Klarlackschicht angeordnete Schicht handeln. Aus dem einleitend Ausgeführten folgt, dass die Tendenz zur Bildung von Nadelstichen mit der Vergrößerung der Schichtdicke dieser Schicht zunehmen muss, da entsprechend höhere Mengen an Luft, organischen Lösemitteln und/oder Wasser aus der Schicht entweichen müssen. Die Schichtdicke dieser Schicht, ab welcher Nadelstiche zu erkennen sind, wird als Nadelstichgrenze bezeichnet. Je höher die Nadelstichgrenze ist, desto besser ist augenscheinlich die Qualität der Stabilität gegen Nadelstiche. Auch die Anzahl von Nadelstichen bei einer vorgegebenen Schichtdicke ist selbstverständlich Ausdruck der Qualität der Stabilität gegen Nadelstiche.

Das beschriebene Verfahren kann grundsätzlich auch zur Herstellung von Mehrschichtlackierungen auf nicht metallischen Substraten, beispielsweise Kunststoffsubstraten, eingesetzt werden. Dabei wird dann der Basislack (b.2.1) oder der erste Basislack (b.2.2.a) auf ein gegebenenfalls vorbehandeltes Kunststoffsubstrat, bevorzugt direkt auf ein gegebenenfalls vorbehandeltes Kunststoffsubstrat aufgebracht.

Im Folgenden wird die vorliegende Erfindung anhand von Beispielen erläutert.

### Beispiele

### 1. Herstellung eines nicht erfindungsgemäßen Wasserbasislacks 1

Die in der Tabelle A unter "wässrige Phase" aufgeführten Komponenten wurden in der angegebenen Reihenfolge zu einer wässrigen Mischung zusammengerührt. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack 1**

| Komponente | Gewichtsteile |
|---|---|
| **Wässrige Phase** | |
| 3%ige Na-Mg-Schichtsilikatlösung | 14 |
| Deionisiertes Wasser | 16 |
| Butylglykol | 1,4 |
| Polyester; hergestellt gemäß Beispiel D, Spalte 16, Z. 37-59 der DE-A-4009858 | 2,3 |
| 3 Gew.%ige wässrige Rheovis® AS S130 Lösung; Rheologiemittel, erhältlich von BASF, in Wasser | 6 |
| TMDD (BASF) | 1,6 |
| Melaminformaldehydharz (Cymel® 1133 von der Allnex) | 5,9 |
| 10%iges Dimethylethanolamin in Wasser | 0,4 |
| Polyurethandispersion - hergestellt nach WO 92/15405 (Seite 14, Zeile 13 bis Seite 15, Zeile 13) | 20 |
| 2-Ethylhexanol | 3,5 |
| Triisobutylphosphat | 2,5 |
| Nacure® 2500 der Firma King Industries | 0,6 |
| Weißpaste | 24 |
| Rußpaste | 1,8 |

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Weißpaste:

Die Weißpaste wurde aus 43 Gewichtsteilen einer gemäß der internationalen Patentanmeldung WO 91/15528 Bindemitteldispersion A hergestellten acrylierten Polyurethandispersion, 50 Gewichtsteilen Titan Rutil 2310, 3 Gewichtsteilen 1-Propoxy-2-Propanol eines und 4 Gewichtsteilen deionisiertem Wasser hergestellt.

### 2. Herstellung eines nicht erfindungsgemäßen Wasserbasislacks 2

Die in den Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B: Wasserbasislack 2**

| Komponente | Gewichtsteile |
|---|---|
| **Wässrige Phase** | |
| 3%ige Na-Mg-Schichtsilikatlösung | 22 |
| Deionisiertes Wasser | 21,2 |
| Butylglykol | 0,8 |
| Polyurethanmodifiziertes Polyacrylat; hergestellt gemäß S. 7, Z. 55 bis S.8, Z. 23 der DE 4437535 A1 | 3 |
| 50 Gew.-%ige Lösung Rheovis® PU 1250 (BASF) Rheologiemittel | 0,2 |
| 3 Gew.%ige wässrige Rheovis® AS S130 Lösung; Rheologiemittel, erhältlich von BASF, in Wasser | 3 |
| TMDD (BASF) | 1,7 |
| Melaminformaldehydharz (Luwipal 052 von der BASF SE) | 5,7 |
| 10%iges Dimethylethanolamin in Wasser | 1,1 |
| Pfropfmischpolymerisat auf Polyurethanbasis; hergestellt analog DE 19948004 - B4 (Seite 27, Beispiel 2), Festkörpergehalt mit Wasser auf 32,5 Gew.-% eingestellt | 22 |
| Isopar® L von der Exxon Mobile | 2 |
| Pluriol® P 900 der Firma BASF SE | 0,8 |
| Tinuvin® 384-2 der Firma BASF SE | 0,8 |
| Tinuvin 123 der Firma BASF SE | 0,4 |
| Blaupaste | 0,1 |

| **Organische Phase** | |
|---|---|
| Aluminiumpigment, erhältlich von Firma Altana-Eckart | 5,6 |
| Butylglykol | 6,6 |
| Polyester; hergestellt gemäß Beispiel D, Spalte 16, Z. 37-59 der DE-A-4009858 | 3 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### 2.1 Herstellung eines erfindungsgemäßen Wasserbasislacks E1

Der Wasserbasislack E1 wurde analog Tabelle B hergestellt, wobei allerdings statt dem Pfropfmischpolymerisat auf Polyurethanbasis; hergestellt analog DE 19948004 - B4 (Seite 27, Beispiel 2) ein Mischpolymerisat (MP) eingesetzt wurde.
Das Mischpolymerisat (MP) beziehungsweise eine wässrige Dispersion enthaltend dieses Polymerisat wurde wie folgt hergestellt.
a) Eine Dispersion eines alpha-methylstyryl-haltigen Polyurethans wurde in Anlehnung an die Patentschrift DE 19948004 B4, Seite 27, Beispiel 1, "Herstellung eines erfindungsgemäßen Polyurethans (B)", hergestellt, wobei zusätzlich Trimethylolpropan eingesetzt wurde und der Festanteil der resultierenden Dispersion nur 29 statt 35,1 Gew.-% betrug. In Anlehnung an das in der Patentschrift DE 19948004 B4 erwähnte Addukt (B2), Herstellbeispiel 1, wurde ein Addukt mit Monoethanolamin statt mit Diethanolamin hergestellt:
   Hierzu wurde zuerst in einem Reaktionsgefäß, ausgerüstet mit Rührer, Innenthermometer, Rückflußkühler und elektrischer Heizung unter Stickstoff 200,0 Gewichtsteile Methylethylketon, 800,0 Gewichtsteile N-Methylpyrrolidon und 221,3 Gewichtsteile Monoethanolamin (Fa. BASF SE) bei 20°C vorgelegt. Zu dieser Mischung wurden während eineinhalb Stunden 778,7 Gewichtsteile 1-(1-Isocyanato-1-methylethyl)-3-(1-methylethenyl)-benzol (TMI® (META) Unsaturated Aliphatic Isocyanate, Fa. Cytec) mit einem Isocyanatgehalt von 20,4 Gew.-% Isocyanat zugetropft, so daß die Reaktionstemperatur 40°C nicht überschritten wurde. Die resultierende Reaktionsmischung wurde so lange gerührt, bis keine freien Isocyanatgruppen mehr nachweisbar waren. Danach wurde die Reaktionsmischung mit 200 ppm Hydrochinon stabilisiert.
   Der theoretische Feststoffgehalt der so hergestellten Lösung des beschriebenen Addukts lag bei 50 Gew.-%.
   Nun wurde in einem weiteren Reaktionsgefäß, ausgerüstet mit Rührer, Innenthermometer, Rückflußkühler und elektrischer Heizung, 431,7 Gewichtsteile eines linearen Polyesterpolyols und 69,7 Gewichtsteile Dimethylolpropionsäure (Fa. GEO Speciality Chemicals) in 355,8 Gewichtsteilen Methylethylketon und 61,6 Gewichtsteilen N-Methylpyrrolidon unter Stickstoff gelöst. Das lineare Polyesterpolyol wurde zuvor aus dimerisierter Fettsäure (Pripol® 1012, Fa. Uniqema), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil und ein zahlenmittlere Molmasse von 1379 g/mol auf. Zu der resultierenden Lösung wurden bei 45°C 288,6 Gewichtsteile Isophorondiisocyanat (Basonat® I, Fa. BASF SE) mit einem Isocyanatgehalt von 37,75 Gew.-% hinzugegeben. Nach dem Abklingen der exothermen Reaktion wurde die Reaktionsmischung unter Rühren langsam auf 80°C erwärmt. Es wurde bei dieser Temperatur weiter gerührt, bis der Isocyanatgehalt der Lösung 3,2 Gew.-% betrug und konstant war. Danach wurde die Reaktionsmischung auf 65°C abgekühlt und 85,2 Gewichtsteile des oben beschriebenen Addukts zusammen mit 21,8 Gewichtsteilen Trimethylolpropan (Fa. BASF SE) hinzugegeben. Die resultierende Reaktionsmischung wurde so lange bei 65°C gerührt, bis der Isocyanatgehalt der Lösung auf 1,0 Gew.-% gesunken war. Jetzt wurden 22,2 Gew.-% Diethanolamin (Fa. BASF SE) zugegeben und der Gehalt an Isocyanatgruppen verfolgt, bis keine freien Isocyanatgruppen mehr nachweisbar waren. Das resultierende, gelöste Polyurethan wurde mit 139,7 Gewichtsteilen Methoxypropanol und 43,3 Gewichtsteilen Triethylamin (Fa. BASF SE) versetzt. 30 Minuten nach der Aminzugabe wurde die Temperatur der Lösung auf 60°C gesenkt, wonach während 30 Minuten 1981 Gewichtsteile deionisiertes Wasser unter Rühren hinzugegeben wurden. Aus der resultierenden Dispersion wurde das Methylethylketon bei 60°C unter Vakuum abdestilliert. Hiernach wurden eventuelle Lösemittel- und Wasserverluste ausgeglichen.
   Die so erhaltene Dispersion eines alpha-methylstyryl-haltigen Polyurethans wies einen Feststoffgehalt von 29,0 Gew-% auf, die Säurezahl lag bei 34,0 mg KOH / g Feststoffgehalt und der pH-Wert bei 7,0 (gemessen bei 23°C).
b) Zur Herstellung der wässrigen Primärdispersion des erfindungsgemäßen Mischpolymerisats (MP) wurden unter Stickstoffatmosphäre 1961,2 Gewichtsteile der alpha-Methylstyryl-haltigen Polyurethandispersion gemäß a) mit 40,0 Gewichtsteilen Methoxypropanol (0,07% auf Polyurethan) und 686,5 Gewichtsteilen deionisiertem Wasser verdünnt und auf 80°C erhitzt. Nachdem der Reaktorinhalt auf 80°C temperiert wurde, wurden 0,6 Gewichtsteile Ammoniumperoxodisulfat, gelöst in 35,7 Gewichtsteilen deionisiertem Wasser, unter Normaldruck in den Reaktor gegeben. Anschließend wurde unter fortwährendem Rühren ein Gemisch aus 301,6 Gewichtsteilen Methylmethacrylat, 261,6 Gewichtsteilen n-Butylacrylat, 5,6 Gewichtsteilen Allylmethacrylat (0,87 Mol-% bezogen auf Gesamtvinylmonomer) und 134,9 Gewichtsteilen N-Methylpyrrolidon während fünf Stunden gleichmäßig zugegeben. Mit Beginn der Zugabe der Monomermischung wurde eine Lösung von 1,1 Gewichtsteilen Ammoniumperoxodisulfat in 71,3 Gewichtsteilen deionisiertem Wasser ebenfalls innerhalb von fünf Stunden zugegeben.

Während der radikalischen Polymerisation wurde im 30 Minuten - Takt der Gehalt an freien Monomeren mittels Gaschromatographie (GC) bestimmt (GC: einmal 50m Silica-Kapillarsäule mit Polyethylenglykol-Phase und einmal mit 50m Silica-Kapillarsäule mit Polydimethylsiloxan-Phase, Trägergas Helium, Splitinjektor 150°C, Ofentemperatur 40 - 220°C, Flammionisationsdetektor, Detektortemperatur 275°C, interner Standard Isobutylacrylat), wobei nach 30 min der höchste Gesamtgehalt Monomer bezogen auf Dispersion mit 0,5 Gew.-% ermittelt wurde (3,1 Gew.-% bezogen auf die Gesamtmenge an zur Polymerisation eingesetzten olefinisch ungesättigten Monomeren).

Nach gleichzeitigem Ende der Monomer- und Initiatordosierung wurde die resultierende Reaktionsmischung bei 80°C eine weitere Stunde gerührt und anschließend auf Raumtemperatur abgekühlt.

Die resultierende Primärdispersion des Mischpolymerisats wies eine sehr gute Lagerstabilität auf. Ihr Feststoffgehalt lag bei 32,5 Gew.-%, die Säurezahl bei 18,8 mg KOH / g Feststoffgehalt und ihr pH-Wert bei 7,0. Die Teilchengröße (z-Mittel) mittels Photonkorrelationsspektroskopie betrug 96 nm. Mittels Gaschromatographie (GC: einmal mit 50m Silica-Kapillarsäule mit Polyethylenglykol-Phase und einmal 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) wurde ein Gehalt von 2,7 Gew.-% Methoxypropanol und 5,7 Gew.-% N-Methylpyrrolidon ermittelt.

Der Gelanteil wurde gravimetrisch nach Extraktion des gefriergetrockneten Polymeren mittels Tetrahydrofuran mit 80,3 Gew.-% ermittelt. Dazu wurde die Dispersion gefriergetrocknet, die Masse des gefriergetrockneten Polymeren bestimmt, um das Polymer anschließend 24 Stunden bei 25°C in einem Überschuss an Tetrahydrofuran (Verhältnis Tetrahydrofuran zu gefriergetrocknetem Mischpolymerisat = 300 : 1) zu extrahieren. Der unlösliche Anteil (Gelanteil) wurde isoliert, 4 Stunden bei 50°C im Umluftofen getrocknet, und anschließend zurückgewogen.

### Vergleich zwischen den Wasserbasislacken 2 und E1

Zur Bestimmung der Nadelstichgrenze und der Nadelstichanzahl wurden die Mehrschichtlackierungen nach der folgenden allgemeinen Vorschrift hergestellt:
Ein mit einer KTL beschichtetes Stahlblech der Abmessungen 30 x 50 cm wurde an einer Längskante mit einem Klebstreifen versehen, um nach der Beschichtung die Schichtdickendifferenzen ermitteln zu können. Der Wasserbasislack 1 wurde in einer Schichtdicke von 16-18 Mikrometern elektrostatisch aufgetragen. Anschließend wurde dieser Aufbau 4 Minuten bei Raumtemperatur abgelüftet.

Die Wasserbasislacke (WBL) 2 beziehungsweise E1 wurden jeweils keilförmig elektrostatisch appliziert, 4 Minuten bei Raumtemperatur abgelüftet und anschließend während 10 Minuten im Umluftofen bei 70°C zwischengetrocknet. Auf die getrocknete Wasserbasislackschicht wurde ein üblicher Zweikomponentenklarlack in einer Schichtdicke von 35-40 Mikrometern elektrostatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze bestimmt. Die Ergebnisse, angegeben sind insbesondere die Schichtdicken der Wasserbasislacke 2 und E1, ab der Nadelstiche zu detektieren sind, finden sich in der Tabelle 1.

**Tabelle 1: Nadelstichgrenze und Nadelstichanzahl der Wasserbasislacke 2 und E 1 auf dem Wasserbasislack 1**

| **WBL** | **Nadelstichgrenze (Mikrometer)** | **Nadelstichanzahl** |
|---|---|---|
| 2 | 13 | 27 |
| E1 | bis 23 | keine |

Die Ergebnisse untermauern, dass der Einsatz eines Mischpolymerisats (MP) die Nadelstichgrenze im Vergleich zum Wasserbasislack 2 deutlich erhöht und gleichzeitig die Nadelstichanzahl vermindert beziehungsweise das Auftreten von Nadelstichen bis zur maximalen Schichtdicke des erhaltenen Keils sogar vollständig verhindert.

### 3. Herstellung eines nicht erfindungsgemäßen Wasserbasislacks 3

Die in der Tabelle C unter "wässrige Phase" aufgeführten Komponenten wurden in der angegebenen Reihenfolge zu einer wässrigen Mischung zusammengerührt. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle C: Wasserbasislack 3**

| Komponente | Gewichtsteile |
|---|---|
| **Wässrige Phase** | |
| 3%ige Na-Mg-Schichtsilikatlösung | 14 |
| Deionisiertes Wasser | 16 |
| Butylglykol | 1,4 |
| Polyester; hergestellt gemäß Beispiel D, Spalte 16, Z. 37-59 der DE-A-4009858 | 2,3 |
| 3 Gew.%ige wässrige Rheovis® AS S130 Lösung; Rheologiemittel, erhältlich von BASF, in Wasser | 6 |
| TMDD (BASF) | 1,6 |
| Melaminformaldehydharz (Cymel® 1133 von der Allnex) | 5,9 |
| 10%iges Dimethylethanolamin in Wasser | 0,4 |
| Pfropfmischpolymerisat auf Polyurethanbasis; hergestellt analog DE 19948004 - B4 (Seite 27, Beispiel 2), Festkörpergehalt mit Wasser auf 32,5 Gew.-% eingestellt | 20 |
| 2-Ethylhexanol | 3,5 |
| Triisobutylphosphat | 2,5 |
| Nacure® 2500 der Firma King Industries | 0,6 |
| Weißpaste | 24 |
| Rußpaste | 1,8 |

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen handelsüblichen Polyethers (Pluriol® P900 der Firma BASF SE) und 61,45 Gewichtsteilen deionisiertem Wasser hergestellt.

### Herstellung der Weißpaste:

Die Weißpaste wurde aus 43 Gewichtsteilen einer gemäß der internationalen Patentanmeldung WO 91/15528 Bindemitteldispersion A hergestellten acrylierten Polyurethandispersion, 50 Gewichtsteilen Titan Rutil 2310, 3 Gewichtsteilen 1-Propoxy-2-Propanol eines und 4 Gewichtsteilen deionisiertem Wasser hergestellt.

### 3.1 Herstellung eines erfindungsgemäßen Wasserbasislacks E2

Der Wasserbasislack E2 wurde analog Tabelle C hergestellt, wobei allerdings statt dem Pfropfmischpolymerisat auf Polyurethanbasis; hergestellt analog DE 19948004 - B4 (Seite 27, Beispiel 2) das Mischpolymerisat (MP) gemäß Beispiel 2.1 eingesetzt wurde.

### Vergleich zwischen den Wasserbasislacken 3 und E2

Zur Bestimmung der Nadelstichgrenze und der Nadelstichanzahl wurden die Mehrschichtlackierungen nach der folgenden allgemeinen Vorschrift hergestellt:
Ein mit einer KTL beschichtetes Stahlblech der Abmessungen 30 x 50 cm wurde an einer Längskante mit einem Klebstreifen versehen, um nach der Beschichtung die Schichtdickendifferenzen ermitteln zu können. Die Wasserbasislacke 3 beziehungsweise E2 wurden elektrostatisch als Keil aufgetragen. Anschließend wurde dieser Aufbau 4 Minuten bei Raumtemperatur abgelüftet.

Der Wasserbasislack 2 wurde in einer Schichtdicke von 15-18 Mikrometern elektrostatisch appliziert, 4 Minuten bei Raumtemperatur abgelüftet und anschließend während 10 Minuten im Umluftofen bei 70°C zwischengetrocknet. Auf die getrocknete Wasserbasislackschicht wurde ein üblicher Zweikomponentenklarlack in einer Schichtdicke von 35-40 Mikrometern elektrostatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze bestimmt. Die Ergebnisse, angegeben sind nur die Schichtdicken der Wasserbasislacke 3 und E2, ab der Nadelstiche zu detektieren sind, finden sich in der Tabelle 2.

**Tabelle 2: Nadelstichgrenze und Nadelstichanzahl der Wasserbasislacke 3 und E2 unter dem Wasserbasislack 2**

| **WBL** | **Nadelstichgrenze (Mikrometer)** | **Nadelstichanzahl** |
|---|---|---|
| 3 | 19 | 12 |
| E2 | 26 | 3 |

Die Ergebnisse untermauern, dass der Einsatz eines Mischpolymerisats (MP) die Nadelstichgrenze im Vergleich zum Wasserbasislack 3 deutlich erhöht und gleichzeitig die Nadelstichanzahl vermindert.

### 4. Herstellung eines nicht erfindungsgemäßen Wasserbasislacks 4

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle D: Wasserbasislack 4**

| Komponente | Gewichtsteile |
|---|---|
| **Wässrige Phase** | |
| 3%ige Na-Mg-Schichtsilikatlösung | 27 |
| Deionisiertes Wasser | 15,9 |
| Butylglykol | 3,5 |
| Polyurethanmodifiziertes Polyacrylat; hergestellt gemäß S. 7, Z. 55 bis S.8, Z. 23 der DE 4437535 A1 | 2,4 |
| 50 Gew.-%ige Lösung Rheovis® PU 1250 (BASF) Rheologiemittel | 0,2 |
| Polyester; hergestellt gemäß Beispiel D, Spalte 16, Z. 37-59 der DE-A-4009858 | 2,2 |
| TMDD (BASF) | 1,2 |
| Melaminformaldehydharz (Luwipal 052 von der BASF SE) | 4,7 |
| 10%iges Dimethylethanolamin in Wasser | 0,5 |
| Pfropfmischpolymerisat auf Polyurethanbasis; hergestellt analog DE 19948004 - B4 (Seite 27, Beispiel 2), Festkörpergehalt mit Wasser auf 32,5 Gew.-% eingestellt | 19,9 |
| Isopropanol | 1,4 |
| Byk-347® der Firma Altana | 0,5 |
| Pluriol® P 900 der Firma BASF SE | 0,3 |
| Tinuvin® 384-2 der Firma BASF SE | 0,6 |
| Tinuvin 123 der Firma BASF SE | 0,3 |
| Rußpaste | 4,3 |
| Blaupaste | 11,4 |
| Mica-Schlämme | 2,8 |

| **Organische Phase** | |
|---|---|
| Aluminiumpigment, erhältlich von Firma Altana-Eckart | 0,3 |
| Butylglykol | 0,3 |
| Polyester; hergestellt gemäß Beispiel D, Spalte 16, Z. 37-59 der DE-A-4009858 | 0,3 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Mica-Schlämme:

Die Mica-Schlämme wurde durch Vermischen mittels eines Rührorgans von 1,5 Gewichtsteilen Butylglykol, 1,5 Gewichtsteilen Polyester; hergestellt gemäß Beispiel D, Spalte 16, Z. 37-59 der DE-A-4009858 und 1,3 Gewichtsteilen der handelsüblichen Mica Mearlin Ext. Fine Violet 539V der Firma Merck erhalten.

### 4.1 Herstellung eines erfindungsgemäßen Wasserbasislacks E3

Der Wasserbasislack E3 wurde analog Tabelle D hergestellt, wobei allerdings statt dem Pfropfmischpolymerisat auf Polyurethanbasis; hergestellt analog DE 19948004 - B4 (Seite 27, Beispiel 2) das Mischpolymerisat (MP) gemäß Beispiel 2.1 eingesetzt wurde.

### Vergleich zwischen den Wasserbasislacken 4 und dem Wasserbasislack E3

Zur Bestimmung der Nadelstichgrenze und der Nadelstichanzahl wurden die Mehrschichtlackierungen nach der folgenden allgemeinen Vorschrift hergestellt:
Ein mit einer KTL beschichtetes Stahlblech der Abmessungen 30 x 50 cm wurde an einer Längskante mit einem Klebstreifen versehen, um nach der Beschichtung die Schichtdickendifferenzen ermitteln zu können. Der Wasserbasislack wurde keilförmig elektrostatisch appliziert. Die resultierende Wasserbasislackschicht wurde während 4 Minuten bei Raumtemperatur abgelüftet und anschließend während 10 Minuten im Umluftofen bei 70°C zwischengetrocknet. Auf die getrocknete Wasserbasislackschicht wurde ein üblicher Zweikomponentenklarlack in einer Schichtdicke von 35-40 Mikrometern elektrostatisch appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze bestimmt. Die Ergebnisse finden sich in der Tabelle 3.

**Tabelle 3: Nadelstichgrenze und Nadelstichanzahl der Wasserbasislacke 4 und dem Wasserbasislack E3**

| **WBL** | **Nadelstichgrenze (Mikrometer)** | **Nadelstichanzahl** |
|---|---|---|
| 4 | 17 | 14 |
| E3 | 29 | 1 |

Die Ergebnisse untermauern wiederum, dass der Einsatz eines Mischpolymerisats (MP) die Nadelstichgrenze im Vergleich zum Wasserbasislack 3 deutlich erhöht und gleichzeitig die Nadelstichanzahl vermindert.

### Kurzbeschreibung der Abbildungen

Abbildung 1:
   Schematischer Aufbau einer auf einem metallischen Substrat (S) angeordneten erfindungsgemäßen Mehrschichtlackierung (M) umfassend eine gehärtete Elektrotauchlackschicht (E.1) sowie eine Basislackschicht (B.2.1) und eine Klarlackschicht (K), welche gemeinsam gehärtet wurden.
Abbildung 2:
   Schematischer Aufbau einer auf einem metallischen Substrat (S) angeordneten erfindungsgemäßen Mehrschichtlackierung (M) umfassend eine gehärtete Elektrotauchlackschicht (E.1), zwei Basislackschichten (B.2.2.x), nämlich eine erste Basislackschicht (B.2.2.a) und eine darüber angeordnete, oberste Basislackschicht (B.2.2.z), sowie eine Klarlackschicht (K), welche gemeinsam gehärtet wurden.
Abbildung 3:
   Schematischer Aufbau einer auf einem metallischen Substrat (S) angeordneten erfindungsgemäßen Mehrschichtlackierung (M) umfassend eine gehärtete Elektrotauchlackschicht (E.1), drei Basislackschichten (B.2.2.x), nämlich eine erste Basislackschicht (B.2.2.a), eine darüber angeordnete Basislackschicht (B.2.2.b) und eine oberste Basislackschicht (B.2.2.z), sowie eine Klarlackschicht (K), welche gemeinsam gehärtet wurden.

## Patentansprüche

1. Verfahren zur Herstellung einer Mehrschichtlackierung (M) auf einem metallischen Substrat (S) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung (2.1) einer Basislackschicht (B.2.1) oder (2.2) mehrerer direkt aufeinander folgender Basislackschichten (B.2.2.x) direkt auf der gehärteten Elektrotauchlackschicht (E.1) durch (2.1) Aufbringen eines wässrigen Basislacks (b.2.1) direkt auf die Elektrotauchlackschicht (E.1) oder (2.2) direkt aufeinanderfolgendes Aufbringen von mehreren Basislacken (b.2.2.x) auf die Elektrotauchlackschicht (E.1),
(3) Herstellung einer Klarlackschicht (K) direkt auf (3.1) der Basislackschicht (B.2.1) oder (3.2) einer obersten Basislackschicht (B.2.2.x) durch Aufbringen eines Klarlacks (k) direkt auf (3.1) die Basislackschicht (B.2.1) oder (3.2) die oberste Basislackschicht (B.2.2.x),
(4) gemeinsame Härtung der (4.1) Basislackschicht (B.2.1) und der Klarlackschicht (K) oder (4.2) der Basislackschichten (B.2.2.x) und der Klarlackschicht (K),
**dadurch gekennzeichnet, dass**
der Basislack (b.2.1) oder mindestens einer der Basislacke (b.2.2.x) mindestens eine wässrige Dispersion, enthaltend mindestens ein Mischpolymerisat (MP), umfasst, wobei das Mischpolymerisat (MP) herstellbar ist, durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
wobei
(a) ein wasserlöslicher Initiator verwendet wird,
(b) die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
(c) die Mischung der olefinisch ungesättigten Monomere mindestens ein mehrfach olefinisch ungesättigtes Monomer enthält.

2. Verfahren nach Anspruch 1, **dadurch gekennzeichnet, dass** die Zudosierung der olefinisch ungesättigten Monomere so erfolgt, dass in der Reaktionslösung eine Konzentration von 5,0 Gew.-%, bezogen auf die Gesamtmenge an zur Polymerisation eingesetzten olefinisch ungesättigten Monomeren, während der gesamten Reaktionsdauer nicht überschritten wird.

3. Verfahren nach Anspruch 1 oder 2, **dadurch gekennzeichnet, dass** die Mischung der olefinisch ungesättigten Monomere 0,1 bis 6,0 mol-% mehrfach olefinisch ungesättigte Monomere enthält.

4. Verfahren nach einem der Ansprüche 1 bis 3, **dadurch gekennzeichnet, dass** die Mischung der olefinisch ungesättigten Monomere Allylmethacrylat enthält und keine weiteren mehrfach olefinisch ungesättigten Monomere enthalten sind.

5. Verfahren nach einem der Ansprüche 1 bis 4, **dadurch gekennzeichnet, dass** die Mischung von olefinisch ungesättigten Monomeren weniger als 10,0 Gew.-% vinylaromatische Monomere, bezogen auf die Gesamtmenge an zur Polymerisation eingesetzten olefinisch ungesättigten Monomeren enthält.

6. Verfahren nach einem der Ansprüche 1 bis 5, **dadurch gekennzeichnet, dass** der Basislack (b.2.1) oder mindestens einer der Basislacke (b.2.2.x), bevorzugt alle der Basislacke (b.2.2.x) zudem mindestens ein hydroxyfunktionelles Polymer als Bindemittel ausgewählt aus der Gruppe bestehend aus Polyurethanen, Polyestern, Polyacrylaten und Mischpolymerisaten dieser Polymere enthält.

7. Verfahren nach Anspruch 6, **dadurch gekennzeichnet, dass** der Basislack (b.2.1) oder mindestens einer der Basislacke (b.2.2.x), bevorzugt alle der Basislacke (b.2.2.x) zudem ein Melaminharz als Vernetzungsmittel enthält.

8. Verfahren nach einem der Ansprüche 1 bis 7, **dadurch gekennzeichnet, dass** der Basislack (b.2.1) oder mindestens einer der Basislacke (b.2.2.x), bevorzugt alle Basislacke (b.2.2.x) mindestens ein Farb- und/oder Effektpigment enthält.

9. Verfahren nach einem der Ansprüche 1 bis 8, **dadurch gekennzeichnet, dass** der Basislack (b.2.1) oder mindestens einer der Basislacke (b.2.2.x) ein Metalleffektpigment, bevorzugt ein blättchenförmiges Aluminiumpigment, enthält.

10. Verfahren nach einem der Ansprüche 1 bis 9, **dadurch gekennzeichnet, dass** der Basislack (b.2.1) oder mindestens einer der Basislacke (b.2.2.x), bevorzugt alle der Basislacke (b.2.2.x) Einkomponenten-Beschichtungsmittel sind.

11. Verfahren nach einem der Ansprüche 1 bis 10, **dadurch gekennzeichnet, dass** die gemeinsame Härtung (4) bei Temperaturen von 100 bis 250°C für eine Dauer von 5 bis 60 min durchgeführt wird.

12. Verfahren nach einem der Ansprüche 1 bis 11, **dadurch gekennzeichnet, dass** (2.2) zwei Basislackschichten (B.2.2.a) und (B.2.2.z) hergestellt werden, wobei die hierzu eingesetzten wässrigen Basislacke (b.2.2.a) und (b.2.2.z) identisch sind und Effektpigmente enthalten.

13. Verfahren nach Anspruch 12, **dadurch gekennzeichnet, dass** der Basislack (b.2.2.a) durch elektrostatische Sprühapplikation und der Basislack (b.2.2.z) durch pneumatische Applikation aufgebracht wird.

14. Verfahren nach einem der Ansprüche 1 bis 11, **dadurch gekennzeichnet, dass** (2.2) mindestens zwei Basislackschichten hergestellt werden, wobei die erste Basislackschicht (B.2.2.a) direkt auf der Elektrotauchlackschicht (E.1) Weißpigmente und Schwarzpigmente enthält und die weiteren Basislackschichten (B.2.2.x) Effektpigmente enthalten.

15. Mehrschichtlackierung (M), die nach dem Verfahren gemäß einem der Ansprüche 1 bis 14 hergestellt wurde.

## Claims

1. Method for producing a multicoat paint system (M) on a metallic substrate (S), comprising
(1) producing a cured electrocoat (E.1) on the metallic substrate (S) by electrophoretic application of an electrocoat (e.1) to the substrate (S) and subsequent curing of the electrocoat (e.1),
(2) producing (2.1) a basecoat (B.2.1) or (2.2) a plurality of directly successive basecoats (B.2.2.x) directly on the cured electrocoat (E.1) by (2.1) applying an aqueous basecoat material (b.2.1) directly to the electrocoat (E.1) or (2.2) applying a plurality of basecoat materials (b.2.2.x) in direct succession to the electrocoat (E.1),
(3) producing a clearcoat (K) directly on (3.1) the basecoat (B.2.1) or (3.2) an uppermost basecoat (B.2.2.x) by applying a clearcoat material (k) directly to (3.1) the basecoat (B.2.1) or (3.2) the uppermost basecoat (B.2.2.x),
(4) jointly curing (4.1) the basecoat (B.2.1) and the clearcoat (K) or (4.2) the basecoats (B.2.2.x) and the clearcoat (K),
**characterized in that**
the basecoat material (b.2.1) or at least one of the basecoat materials (b.2.2.x) comprises at least one aqueous dispersion comprising at least one copolymer (CP), said copolymer (CP) being preparable by
(i) initially charging an aqueous dispersion of at least one polyurethane, and then
(ii) polymerizing a mixture of olefinically unsaturated monomers in the presence of the polyurethane from (i),
in which
(a) a water-soluble initiator is used,
(b) the olefinically unsaturated monomers are metered in such that a concentration of 6.0% by weight, based on the total amount of olefinically unsaturated monomers used for polymerization, in the reaction solution is not exceeded over the entire reaction time, and
(c) the mixture of the olefinically unsaturated monomers comprises at least one polyolefinically unsaturated monomer.

2. Method according to Claim 1, **characterized in that** the olefinically unsaturated monomers are metered in such that a concentration of 5.0% by weight, based on the total amount of olefinically unsaturated monomers used for polymerization, in the reaction solution is not exceeded over the entire reaction time.

3. Method according to Claim 1 or 2, **characterized in that** the mixture of olefinically unsaturated monomers comprises 0.1 to 6.0 mol% of polyolefinically unsaturated monomers.

4. Method according to any of Claims 1 to 3, **characterized in that** the mixture of olefinically unsaturated monomers comprises allyl methacrylate, and no further polyolefinically unsaturated monomers are present.

5. Method according to any of Claims 1 to 4, **characterized in that** the mixture of olefinically unsaturated monomers comprises less than 10.0% by weight of vinylaromatic monomers, based on the total amount of olefinically unsaturated monomers used for polymerization.

6. Method according to any of Claims 1 to 5, **characterized in that** the basecoat material (b.2.1) or at least one of the basecoat materials (b.2.2.x), preferably all of the basecoat materials (b.2.2.x), additionally comprise(s) at least one hydroxyfunctional polymer as a binder, selected from the group consisting of polyurethanes, polyesters, polyacrylates and copolymers of these polymers.

7. Method according to Claim 6, **characterized in that** the basecoat material (b.2.1) or at least one of the basecoat materials (b.2.2.x), preferably all of the basecoat materials (b.2.2.x), additionally comprise(s) a melamine resin as a crosslinking agent.

8. Method according to any of Claims 1 to 7, **characterized in that** the basecoat material (b.2.1) or at least one of the basecoat materials (b.2.2.x), preferably all of the basecoat materials (b.2.2.x), comprise(s) at least one colour pigment and/or effect pigment.

9. Method according to any of Claims 1 to 8, **characterized in that** the basecoat material (b.2.1) or at least one of the basecoat materials (b.2.2.x) comprise(s) a metal effect pigment, preferably a lamellar aluminium pigment.

10. Method according to any of Claims 1 to 9, **characterized in that** the basecoat material (b.2.1) or at least one of the basecoat materials (b.2.2.x), preferably all of the basecoat materials (b.2.2.x), is/are one-component coating compositions.

11. Method according to any of Claims 1 to 10, **characterized in that** the joint curing (4) is performed at temperatures of 100 to 250°C for a period of 5 to 60 min.

12. Method according to any of Claims 1 to 11, **characterized in that** (2.2) two basecoats (B.2.2.a) and (B.2.2.z) are produced, for which the aqueous basecoat materials (b.2.2.a) and (b.2.2.z) used are identical and comprise effect pigments.

13. Method according to Claim 12, **characterized in that** the basecoat material (b.2.2.a) is applied by electrostatic spray application, and the basecoat material (b.2.2.z) by pneumatic application.

14. Method according to any of Claims 1 to 11, **characterized in that** (2.2) at least two basecoats are produced, wherein the first basecoat (B.2.2.a) directly atop the electrocoat (E.1) comprises white pigments and black pigments, and the further basecoats (B.2.2.x) comprise effect pigments.

15. Multicoat paint system (M) which has been produced by the method according to any of Claims 1 to 14.

## Revendications

1. Procédé pour la préparation d'un vernis multicouche (M) sur un substrat métallique (S) comprenant
(1) la préparation d'une couche durcie de vernis d'électrodéposition (E.1) sur le substrat métallique (S) par application par électrophorèse d'un vernis d'électrodéposition (e.1) sur le substrat (S) et ensuite le durcissement du vernis d'électrodéposition (e.1).
(2) la préparation (2.1) d'une couche de vernis de base (B.2.1) ou (2.2) de plusieurs couches de vernis de base se suivant directement les unes sur les autres (B.2.2.x), directement sur la couche durcie de vernis d'électrodéposition (E.1), par (2.1) l'application d'un vernis de base aqueux (b.2.1) directement sur la couche de vernis d'électrodéposition (E.1) ou (2.2) par l'application, directement en se suivant les unes sur les autres, de plusieurs vernis de base (b.2.2.x) sur la couche de vernis d'électrodéposition (E.1),
(3) la préparation d'une couche de vernis transparent (K) directement sur (3.1) la couche de vernis de base (B.2.1) ou (3.2) sur une couche de vernis de base supérieure (B.2.2.x) par l'application d'un vernis transparent (k) directement sur (3.1) la couche de vernis de base (B.2.1) ou (3.2) sur la couche de vernis de base supérieure (B.2.2.x),
(4) durcissement conjoint de (4.1) la couche de vernis de base (B.2.1) et de la couche de vernis transparent (K) ou (4.2) des couches de vernis de base (B.2.2.x) et de la couche de vernis transparent (K),
**caractérisé en ce que**
le vernis de base (b.2.1) ou au moins un des vernis de base (b.2.2.x) comprend au moins une dispersion aqueuse, contenant au moins un copolymère (MP), le copolymère (MP) étant pouvant être préparé par
(i) la mise en place d'une dispersion aqueuse d'au moins un polyuréthane, et ensuite
(ii) la polymérisation d'un mélange de monomères oléfiniquement insaturés en présence du polyuréthane de (i),
(a) un initiateur soluble dans l'eau étant utilisé,
(b) le dosage des monomères oléfiniquement insaturés étant réalisé de telle façon que, dans la solution de réaction, une concentration de 6,0 % en poids, par rapport à la quantité totale des monomères oléfiniquement insaturés utilisés pour la polymérisation, n'est pas dépassée pendant la durée totale de la réaction, et
(c) le mélange des monomères oléfiniquement insaturés contenant au moins un monomère oléfiniquement polyinsaturé.

2. Procédé selon la revendication 1, **caractérisé en ce que** le dosage des monomères oléfiniquement insaturés est réalisé de telle façon que, dans la solution de réaction, une concentration de 5,0 % en poids, par rapport à la quantité totale des monomères oléfiniquement insaturés utilisés pour la polymérisation, n'est pas dépassée pendant la durée totale de la réaction.

3. Procédé selon la revendication 1 ou 2, **caractérisé en ce que** le mélange des monomères oléfiniquement insaturés contient 0,1 à 6,0 % en moles de monomères oléfiniquement polyinsaturés.

4. Procédé selon l'une quelconque des revendications 1 à 3, **caractérisé en ce que** le mélange des monomères oléfiniquement insaturés contient du méthacrylate d'allyle et qu'aucun autre monomère oléfiniquement polyinsaturé n'est contenu.

5. Procédé selon l'une quelconque des revendications 1 à 4, **caractérisé en ce que** le mélange de monomères oléfiniquement insaturés contient moins de 10,0 % en poids de monomères aromatiques vinyliques, par rapport à la quantité totale des monomères oléfiniquement insaturés utilisés pour la polymérisation.

6. Procédé selon l'une quelconque des revendications 1 à 5, **caractérisé en ce que** le vernis de base (b.2.1) ou au moins un des vernis de base (b.2.2.x), préférablement tous les vernis de base (b.2.2.x) contie(nne)nt en outre au moins un polymère à fonctionnalité hydroxyle en tant que liant, choisi dans le groupe constitué par les polyuréthanes, les polyesters, les polyacrylates et les copolymères de ces polymères.

7. Procédé selon la revendication 6, **caractérisé en ce que** le vernis de base (b.2.1) ou au moins un des vernis de base (b.2.2.x), préférablement tous les vernis de base (b.2.2.x) contie(nne)nt en outre une résine de mélamine en tant qu'agent de réticulation.

8. Procédé selon l'une quelconque des revendications 1 à 7, **caractérisé en ce que** le vernis de base (b.2.1) ou au moins un des vernis de base (b.2.2.x), préférablement tous les vernis de base (b.2.2.x) contie(nne)nt au moins un pigment colorant et/ou un pigment à effet.

9. Procédé selon l'une quelconque des revendications 1 à 8, **caractérisé en ce que** le vernis de base (b.2.1) ou au moins un des vernis de base (b.2.2.x) contient un pigment à effet métallique, préférablement un pigment d'aluminium en forme de de paillettes.

10. Procédé selon l'une quelconque des revendications 1 à 9, **caractérisé en ce que** le vernis de base (b.2.1) ou au moins un des vernis de base (b.2.2.x), préférablement tous les vernis de base (b.2.2.x) est/sont un/des agent(s) de revêtement à un seul composant.

11. Procédé selon l'une quelconque des revendications 1 à 10, **caractérisé en ce que** le durcissement conjoint (4) est réalisé à des températures de 100 à 250 °C pendant une durée de 5 à 60 min.

12. Procédé selon l'une quelconque des revendications 1 à 11, **caractérisé en ce que** (2.2) deux couches de vernis de base (B.2.2.a) et (B.2.2.z) sont préparées, les vernis de base aqueux utilisés (b.2.2a) et (b.2.2.z) étant identiques et contenant des pigments à effet.

13. Procédé selon la revendication 12, **caractérisé en ce que** le vernis de base (b.2.2.a) est appliqué par application par pulvérisation électrostatique et le vernis de base (b.2.2.z) est appliqué par application pneumatique.

14. Procédé selon l'une quelconque des revendications 1 à 11, **caractérisé en ce que** (2,2) au moins deux couches de vernis de base sont préparées, la première couche de vernis de base (B.2.2.a) directement sur la couche de vernis d'électrodéposition (E.1) contient des pigments blancs et des pigments noirs et les autres couches de vernis de base (B.2.2.x) contiennent des pigments à effet.

15. Vernis multicouche (M), qui a été préparé d'après le procédé selon l'une quelconque des revendications 1 à 14.
